# EUROPEAN PATENT APPLICATION

(11) **EP 4 700 536 A1**
(43) Date of publication of application: **25.02.2026**
(21) Application number: 25727639.4
(22) Date of filing: 02.05.2025
(51) Int. Cl.: G06F 1/16

(54) **FOLDABLE ELECTRONIC DEVICE INCLUDING HINGE PLATE**

(30) Priority: 03.07.2024 KR 20240087525; 09.09.2024 KR 20240122250; 22.10.2024 KR 20240145177
(71) Applicant: Samsung Electronics Co., Ltd, Suwon-si, Gyeonggi-do 16677 (KR)
(72) Inventor: KOO, Wonkyu, Suwon-si, Gyeonggi-do 16677 (KR); KIM, Yongwoon, Suwon-si, Gyeonggi-do 16677 (KR); PARK, Eunsoo, Suwon-si, Gyeonggi-do 16677 (KR); OH, Hyunchul, Suwon-si, Gyeonggi-do 16677 (KR); CHO, Yonglak, Suwon-si, Gyeonggi-do 16677 (KR)
(74) Representative: HGF
(86) International application number: PCT/KR2025/005984
(87) International publication number: WO 2026/010106

(57) **Abstract**

The disclosure relates to a foldable electronic device. A foldable electronic device according to an embodiment of the disclosure may comprise a foldable housing comprising a first housing and a second housing, a flexible display disposed across the first housing and the second housing, a hinge module configured to rotatably couple the first housing and the second housing about a folding axis, a hinge plate assembly disposed between the hinge module and the flexible display and comprising a first hinge plate disposed at the first housing side and a second hinge plate disposed at the second housing side, a hinge cover disposed to surround the hinge module, and a flexible circuit board disposed across the first housing and the second housing. At least a portion of the flexible circuit board may be disposed at a space formed between the hinge plate assembly and the hinge cover. The first hinge plate may comprise a first body portion having a plate shape, and a first reinforcement portion comprising a part protruding in a direction perpendicular to the first body portion and formed by bending a portion of the first hinge plate. The first reinforcement portion may be supported by at least one of an internal structure, disposed adjacent to the first reinforcing member, of the first housing, the hinge module or the hinge cover to alleviate deformation of the first hinge plate due to external pressure.

## Description

### [Technical Field]

Various embodiments of the disclosure relate to a foldable electronic device including a hinge plate, e.g., a foldable electronic device capable of enhancing the durability of a display by enhancing the structure of a hinge plate supporting the display.

### [Background Art]

Advancing information communication and semiconductor technologies accelerate the spread and use of various electronic devices. Recent electronic devices are being developed to carry out communication.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images.

As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function, such as for mobile banking, and a scheduling or e-wallet function. These electronic devices have been downsized to be conveniently carried by users.

### [Disclosure of Disclosure]

### [Solution to Problems]

A foldable electronic device according to an embodiment of the disclosure may comprise a foldable housing comprising a first housing and a second housing, a flexible display disposed across the first housing and the second housing, a hinge module configured to rotatably couple the first housing and the second housing about a folding axis, a hinge plate assembly disposed between the hinge module and the flexible display and comprising a first hinge plate disposed at the first housing side and a second hinge plate disposed at the second housing side, a hinge cover disposed to surround the hinge module, and a flexible circuit board disposed across the first housing and the second housing. At least a portion of the flexible circuit board may be disposed at a space formed between the hinge plate assembly and the hinge cover. The first hinge plate may comprise a first body portion having a plate shape, and a first reinforcement portion comprising a part protruding in a direction perpendicular to the first body portion and formed by bending a portion of the first hinge plate. The first reinforcement portion may be supported by at least one of an internal structure, disposed adjacent to the first reinforcing member, of the first housing, the hinge module or the hinge cover to alleviate deformation of the first hinge plate due to external pressure.

A foldable electronic device according to an embodiment of the disclosure may comprise a foldable housing comprising a first housing and a second housing, a flexible display disposed across the first housing and the second housing, a hinge module configured to rotatably couple the first housing and the second housing about a folding axis, and a hinge plate assemble disposed between the hinge module and the flexible display and comprising a first hinge plate disposed at the first housing side and a second hinge plate disposed at the second housing side. The first hinge plate may comprise a first body portion having a plate shape, and a first reinforcement portion comprising a part protruding in a direction perpendicular to the first body portion and formed by bending a portion of the first hinge plate. The first reinforcement portion may include a first perpendicular side reinforcement portion disposed on an edge perpendicular to the folding axis among edges of the first hinge plate and a first horizontal side reinforcement portion disposed on at least a portion of an edge parallel to the folding axis among the edges of the first hinge plate.

### [Brief Description of the Drawings]

The foregoing and other aspects, configurations, and/or advantages of various embodiments of the disclosure will be more apparent from the following detailed description taken in conjunction with the accompanying drawings.
FIG. 1 is a block diagram illustrating an electronic device in a network environment according to an embodiment of the disclosure;
FIG. 2 is a front view, side view, and rear view illustrating an electronic device in an unfolded state according to an embodiment of the disclosure;
FIG. 3 is a front view, side view, and rear view illustrating an electronic device in a folded state according to an embodiment of the disclosure;
FIG. 4 is an exploded perspective view illustrating an electronic device in an unfolded state according to an embodiment of the disclosure;
FIG. 5 is a plan view illustrating a partial configuration of a foldable electronic device according to an embodiment of the disclosure;
FIG. 6 simultaneously illustrates a cross-sectional view taken along line A-A' of FIG. 5 and a cross-sectional view taken along line B-B' of FIG. 5;
FIG. 7 is an enlarged perspective view illustrating a partial configuration of a foldable electronic device according to an embodiment of the disclosure;
FIG. 8 is a cross-sectional view illustrating a partial configuration of a foldable electronic device according to an embodiment of the disclosure, taken along line C-C' of FIG. 5;
FIG. 9 is an enlarged perspective view illustrating a partial configuration of a foldable electronic device according to an embodiment of the disclosure;
FIG. 10 is an enlarged plan view illustrating a partial configuration of a foldable electronic device according to an embodiment of the disclosure;
FIG. 11 is an enlarged cross-sectional view illustrating a partial configuration of a foldable electronic device according to an embodiment of the disclosure;
FIG. 12 is an enlarged cross-sectional view illustrating a partial configuration of a foldable electronic device according to an embodiment of the disclosure;
FIG. 13 is a plan view illustrating a partial configuration of a foldable electronic device according to an embodiment of the disclosure;
FIG. 14 is a cross-sectional view illustrating a partial configuration of a foldable electronic device according to an embodiment of the disclosure, taken along line D-D' of FIG. 13;
FIG. 15 is a plan view illustrating a partial configuration of a foldable electronic device according to an embodiment of the disclosure;
FIG. 16 is a cross-sectional view taken along line E-E' of FIG. 15;
FIG. 17 is a perspective view illustrating an unfolded state of a foldable electronic device according to an embodiment of the disclosure;
FIG. 18 is a perspective view illustrating an unfolded state of a multi-foldable electronic device 900 according to an embodiment of the disclosure;
FIG. 19 is a perspective view illustrating a folded state of a foldable electronic device according to an embodiment of the disclosure;
FIG. 20 is a side view illustrating a foldable electronic device as viewed in one direction according to an embodiment of the disclosure;
FIG. 21 is an exploded perspective view illustrating a foldable electronic device according to an embodiment of the disclosure; and
FIG. 22 is an exploded perspective view illustrating a foldable electronic device according to an embodiment of the disclosure.

Throughout the drawings, like reference numerals may be assigned to like parts, components, and/or structures.

### [Mode for the Invention]

In a foldable electronic device including a flexible display, reducing and/or preventing creases of the display is a major issue. To address the issues, it may be important to design a hinge structure for implementing 'folding (folding operation) and/or unfolding (unfolding operation)' (hereinafter, simply referred to as a 'folding operation') of a foldable electronic device. As a hinge structure, a U-shaped (or wedge-shaped) hinge structure where components included in the hinge assembly are opened in a U-shape in the folded state to face each other, and a water drop-shaped (or dumbbell-shaped) hinge structure where components included in the hinge assembly form a negative angle (e.g., -5 degrees) in the folded state have been disclosed.

Such a foldable electronic device includes a hinge plate (or wing plate) covering the hinge structure. The hinge plate is a component that protects the hinge structure by covering the hinge structure while simultaneously supporting the flexible display in the folding area and flattening the folding area. Since the foldable electronic device should be designed in a thin thickness, and thus the space between the hinge structure and the flexible display should be minimized, the conventional hinge plate is provided as a very thin plate that is about 0.2 to 0.3 mm thick.

However, the conventional hinge structure of the foldable electronic device is designed to be very complex and dense, so there was a limit to providing a structure that reinforces the structural rigidity of the hinge plate. As a result, when external pressure or external impact is applied to the folding area (e.g., when compression or impact occurs in the area around the P-CAP or dust cover, or when the user presses the folding area while mounting or covering with the protective cover), the hinge plate is easily deformed, and the flexible display supported by the hinge plate is also easily deformed, causing damage to the flexible display. For example, in the conventional foldable electronic device, when external pressure or external impact is applied to the folding area, multiple cracks occur in the flexible display and leakage current occurs, causing bit loss or breakage of the vacuum of the thin film encapsulation. Resultantly, the pixels may be oxidized and parts of the screen may darken. Further, as these issues repeatedly occur, the display panel may experience peeling or blackening.

Further, in the conventional foldable electronic device, a gap is formed between the hinge plates fixed to the two opposite housings, so the flexible display may not effectively be supported in the gap area, causing the flexible display to be easily damaged when external pressure or external impact is applied to the gap area.

The disclosure aims to mitigate deformation of the hinge plate due to external impact or external pressure and thus reduce damage to the flexible display due to external impact or external pressure.

The disclosure also aims to effectively support the flexible display by the hinge plate by minimizing the gap between hinge plates through shape design of the hinge plate to thereby mitigate damage to the flexible display due to external impact or external pressure.

Objects of the disclosure are not limited to those mentioned, but may rather be diverse without departing from the scope of the disclosure.

The foldable electronic device according to various embodiments of the disclosure may mitigate deformation of the hinge plate due to external impact or external pressure, and thereby mitigate damage to the flexible display due to external impact or external pressure.

The foldable electronic device according to various embodiments of the disclosure may effectively support the flexible display by the hinge plate by minimizing the gap between hinge plates through shape design of the hinge plate to thereby mitigate damage to the flexible display due to external impact or external pressure.

Effects obtainable from the disclosure are not limited to the above-mentioned effects, and other effects not mentioned may be apparent to one of ordinary skill in the art from the following description.

The following description taken in conjunction with the accompanying drawings may provide an understanding of various exemplary implementations of the disclosure, including claims. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope of the disclosure. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims.

The singular forms "a," "an," and "the" are intended to include the plural forms as well, unless the context clearly indicates otherwise. Thus, as an example, "a component surface" may be interpreted as including one or more of the surfaces of a component.

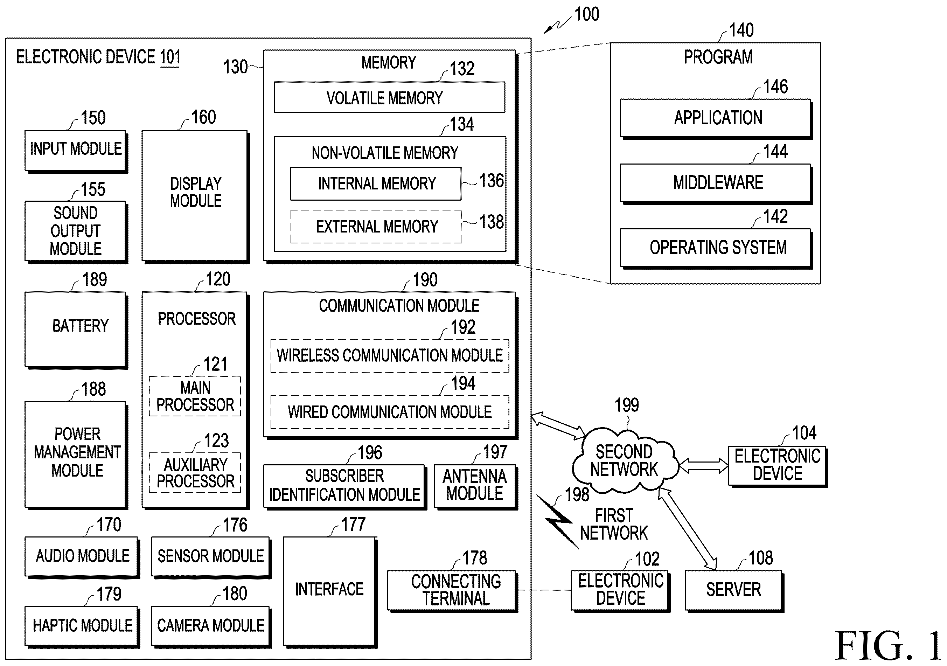

FIG. 1 is a block diagram illustrating an electronic device 101 in a network environment 100 according to an embodiment of the disclosure.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mm Wave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

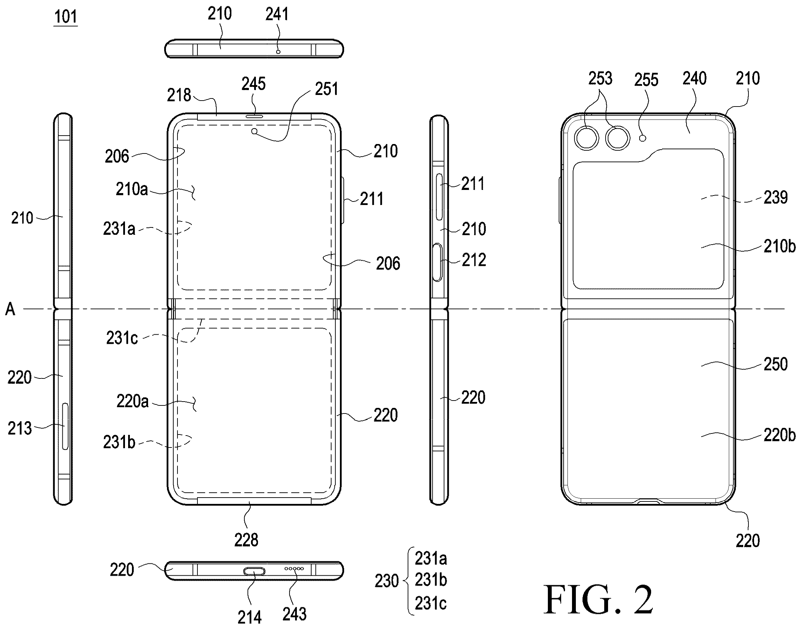

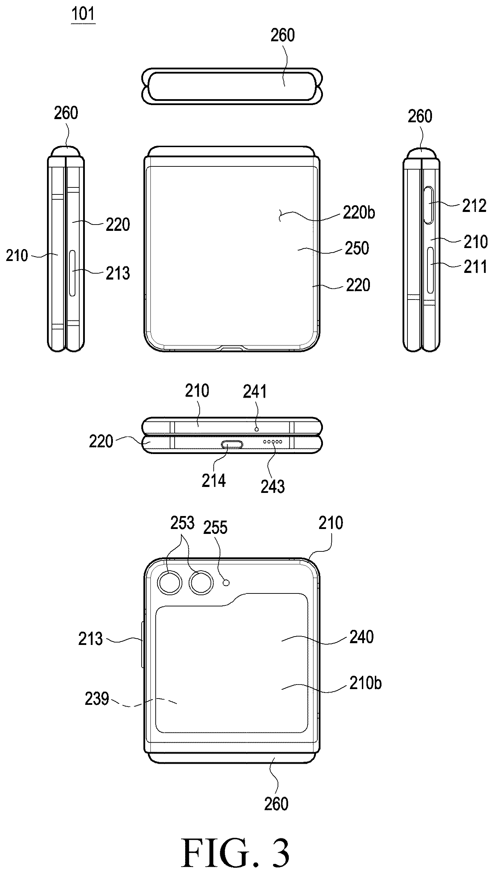

FIG. 2 illustrates a front view, side view, and rear view illustrating an electronic device in an unfolded state according to an embodiment of the disclosure. FIG. 3 illustrates a front view, side view, and rear view illustrating an electronic device in a folded state according to an embodiment of the disclosure.

Referring to FIGS. 2 and 3, an electronic device 101 according to an embodiment may include a first housing 210, a second housing 220, a flexible or foldable display 230 (hereinafter, simply a "first display 230") (e.g., the display module 160 of FIG. 1) disposed on the first housing 210 and the second housing 220, and a hinge cover 260.

According to an embodiment, the surface on which the first display 230 is disposed may be defined as a front surface of the electronic device 101. At least a portion of the front surface of the electronic device 101 may be formed of a substantially transparent front plate (e.g., a glass plate or polymer plate including various coat layers). The opposite surface to the front surface may be defined as a rear surface of the electronic device 101. The rear surface of the electronic device 101 may be formed by a substantially opaque rear plate (hereinafter, referred to as a 'back cover'). The back cover may be formed of, e.g., laminated or colored glass, ceramic, polymer, metal (e.g., aluminum, stainless steel (STS), or magnesium), or a combination of at least two thereof. The surface surrounding the space between the front and back surfaces may be defined as a side surface of the electronic device 101. The side surface may be formed by a side bezel structure (or a "side member") that couples to the front plate and the rear plate and includes a metal and/or polymer. According to an embodiment, the back cover and the side bezel plate may be integrally formed together and include the same material (e.g., a metal, such as aluminum).

According to an embodiment, the electronic device 101 may include at least one or more of a first display 230, audio modules 241, 243, and 245, a sensor module 255, camera devices 251 and 253, key input devices 211, 212, and 213, and a connector hole 214. According to an embodiment, the electronic device 101 may omit at least one (e.g., the key input devices 211, 212, and 213) of the components or additionally include another component (e.g., a light emitting device).

According to an embodiment, the first display 230 may be a display wherein at least a portion of which may be transformed into a flat or curved surface (e.g., a flexible display). According to an embodiment, the first display 230 may include a folding area 231c, a first area 231a disposed on one side of the folding area 203 (e.g., an upper side of the folding area 231c of FIG. 2), and a second area 231b disposed on the opposite side of the folding area 231c (e.g., a lower side of the folding area 231c of FIG. 2). However, the segmentation of the first display 230 as shown in FIG. 2 is merely an example, and the first display 230 may be divided into a plurality of (e.g., four or more, or two) areas depending on the structure or function. For example, in the embodiment illustrated in FIG. 2, the first display 230 may be divided into the areas by the folding area 231c or folding axis A but, in an embodiment, the first display 230 may be divided into the areas with respect to another folding area 231c or another folding axis (e.g., a folding axis perpendicular to the folding axis A).

According to an embodiment, the microphone hole 241 may have a microphone inside to obtain external sounds. In an embodiment, there may be a plurality of microphones to be able to detect the direction of a sound.

According to an embodiment, the speaker holes 243 and 245 may include an external speaker hole 243 and a phone receiver hole 245. According to an embodiment, the speaker holes 243 and 245 and the microphone hole 241 may be implemented as a single hole, or speakers may be rested without the speaker holes 243 and 245 (e.g., piezo speakers). Various changes may be made to the position and number of microphone holes 241 and speaker holes 243 and 245 according to an embodiment.

According to an embodiment, the electronic device 101 may include a first camera device 251 disposed on the first surface 210a of the first housing 210 of the electronic device 101 and a second camera device 253 disposed on the second surface 210b. The electronic device 101 may further include a flash (not shown). The camera devices 251 and 253 may include one or more lenses, an image sensor, and/or an image signal processor. The flash (not shown) may include, e.g., a light emitting diode or a xenon lamp.

According to an embodiment, the sensor module 255 may generate an electrical signal or a data value corresponding to an internal operating state of the electronic device 101 or an external environmental state. Although not shown in the drawings, the electronic device 101 may additionally or alternatively include a sensor module (e.g., the sensor module 176 of FIG. 1) other than the sensor module 255 provided on the second surface 210b of the first housing 210. The electronic device 101 may include, as the sensor module, at least one of a proximity sensor, a fingerprint sensor, an HRM sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the key input devices 211, 212, and 213 may be disposed on a side surface of the foldable housing (e.g., the hinge cover 260, the first housing 210 and/or the second housing 220). According to an embodiment, the electronic device 101 may exclude all or some of the above-mentioned key input devices 211, 212, and 213 and the excluded key input devices may be implemented in other forms, e.g., as soft keys, on the first display 230. In an embodiment, the key input device may be configured to implement key input by a sensor module (e.g., a gesture sensor).

According to an embodiment, the connector hole 214 may be configured to receive a connector (e.g., a USB connector) for transmitting/receiving power and/or data to/from an external electronic device or, additionally or alternatively, a connector for transmitting/receiving audio signals to/from an external electronic device.

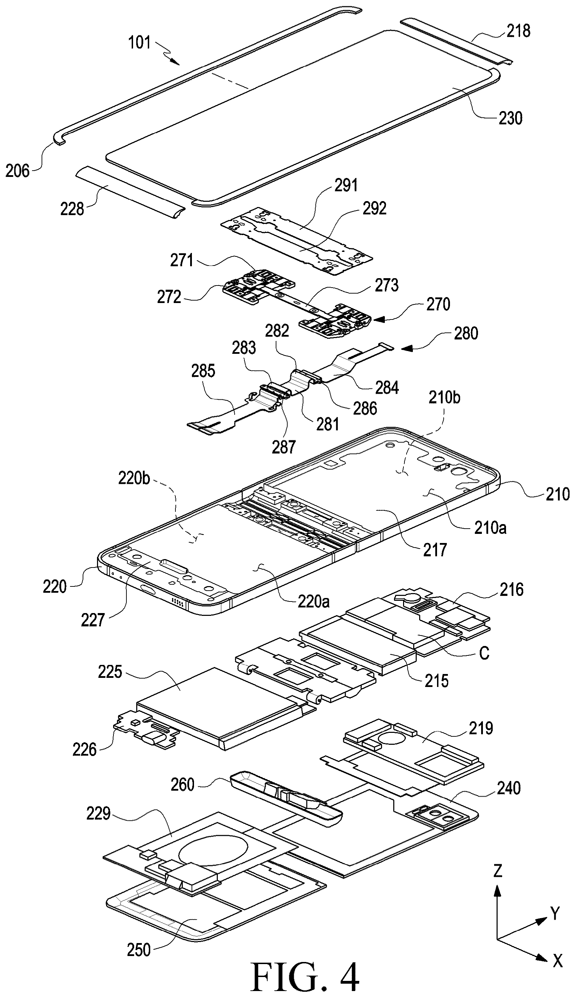

According to an embodiment, a foldable housing may be implemented by a combination of the first housing 210, the second housing 220, the first back cover 240, the second back cover 250, and/or the hinge module (e.g., the hinge structure 270 of FIG. 4). The foldable housing of the electronic device 101 are not limited to the shape and coupling shown but may rather be implemented in other shapes or via a combination and/or coupling of other components. For example, in an embodiment, the first housing 210 and the first rear cover 240 may be integrally formed with each other, and the second housing 220 and the second rear cover 250 may be integrally formed with each other. According to an embodiment of the disclosure, 'housing' may mean a combination of other various components not mentioned and/or a combined configuration thereof. For example, it may be described that a first area 231a of the first display 230 forms one surface of the first housing 210 and, in an embodiment, the first area 231a of the first display 230 is disposed or attached to one surface of the first housing 210.

According to an embodiment, the first housing 210 may be connected to the hinge structure (e.g., the hinge structure 270 of FIG. 4 described below) and may include a first surface 210a facing in a first direction and a second surface 210b facing in a second direction opposite to the first direction. The second housing 220 may be connected to the hinge structure (e.g., the hinge structure 270 of FIG. 4 described below) and may include a third surface 220a facing in a third direction and a fourth surface 220b facing in a fourth direction opposite to the third direction and may be rotated or pivoted from the first housing 210 about the hinge structure (or folding axis A).

According to an embodiment, the first housing 210 and the second housing 220 may be disposed on two opposite sides (or upper/lower sides) of the folding axis A. The angle or distance between the first housing 210 and the second housing 220 may be varied depending on whether the electronic device 101 is in the unfolded state, the folded state, or the partially unfolded (or partially folded) intermediate state.

According to an embodiment, the first housing 210 and the second housing 220 may at least partially be formed of a metal or non-metallic material with a rigidity selected to support the first display 230. The at least a portion formed of the metal material may be provided as a ground plane or radiating conductor of the electronic device 101 and, if provided as the ground plane, it may be electrically connected with a ground line formed on the printed circuit board (e.g., the printed circuit board 216 or 226 of FIG. 4).

According to an embodiment, the first rear cover 240 may be disposed on one side (e.g., the upper side in FIG. 2) of the folding axis A, on the rear surface of the electronic device 101, e.g., it may have a substantially rectangular periphery which may be surrounded by the first housing 210 (and/or the side bezel structure). Similarly, the second back cover 250 may be disposed on the opposite side (e.g., the lower side in FIG. 2) of the folding axis A on the rear surface of the electronic device 101 and its periphery may be surrounded by the second housing 220 (and/or the side bezel structure).

According to an embodiment, the first rear cover 240 and the second rear cover 250 may be substantially symmetrical in shape with respect to the folding axis A. However, the first rear cover 240 and the second rear cover 250 are not necessarily symmetrical in shape. In an embodiment, the electronic device 101 may include the first rear cover 240 and the second rear cover 250 in various shapes. In an embodiment, the first rear cover 240 may be integrally formed with the first housing 210, and the second rear cover 250 may be integrally formed with the second housing 220.

According to an embodiment, the first rear cover 240, the second rear cover 250, the first housing 210, and the second housing 220 may form a space where various components (e.g., the printed circuit boards 216 and 226 or batteries 215 and 225 of FIG. 4) of the electronic device 101 may be disposed. According to an embodiment, one or more components may be arranged or visually exposed on/through the rear surface of the electronic device 101. For example, at least a portion of a second display 239 may be visually exposed through the first back cover 240. In an embodiment, one or more components or sensors may be visually exposed through the first back cover 240. According to various embodiments, the components or sensors may include a proximity sensor, a rear camera, and/or a flash. Although not separately shown in the drawings, one or more other components or sensors may be visually exposed through the second back cover 250.

According to an embodiment, the front camera device 251 exposed from the front surface of the electronic device 101 through one or more openings or the rear camera device 253 exposed through the first rear cover 240 may include one or more lenses, an image sensor, and/or an image signal processor. The flash (not shown) may include, e.g., a light emitting diode or a xenon lamp. In an embodiment, two or more lenses (an infrared (IR) camera, a wide-angle lens, and a telephoto lens) and image sensors may be disposed on one surface of the electronic device 101.

According to an embodiment, the foldable housing 210, 220, and 260 may include a hinge cover 260, a first housing 210, and a second housing 220. The first housing 210 and the second housing 220 may be rotated with respect to the hinge structure 270. When the electronic device 101 switches from the unfolded state to the folded state, the first housing 210 and the second housing 220 may rotate with respect to the hinge structure 270 to be close to each other. When the electronic device 101 switches from the folded state to the unfolded state, a portion of the first housing 210 and a portion of the second housing 220 may rotate with respect to the hinge cover 260 so as to move away from each other. According to an embodiment of the disclosure, the folding direction of the first housing 210 and/or the second housing 220 may include a direction in which the first housing 210 and/or the second housing 220 is rotated with respect to the hinge structure 270 when the first housing 210 and/or the second housing 220 is switched from the unfolded state to the folded state. The unfolding direction of the first housing 210 and/or the second housing 220 may include a direction in which the first housing 210 and/or the second housing 220 is rotated with respect to the hinge structure 270 when the first housing 210 and/or the second housing 220 is switched from the folded state to the unfolded state.

According to an embodiment, the electronic device 101 may be changed to a folded state (e.g. a first state) of the first display 230 or an unfolded state (e.g. a second state) of the first display 230. For example, the first housing 210 and the second housing 220 may rotate about the folding axis A between the folded state in which the first area 231a and the second area 231b of the first display 230 face each other and a state (e.g., the unfolded state of the electronic device 101 illustrated in FIG. 2) unfolded from the folded state by a designated angle.

According to an embodiment, as the first housing 210 and the second housing 220 rotate about the folding axis A, the electronic device 101 may include a folded state and an unfolded state. The folded state may be a state in which the first housing 210 and the second housing 220 face each other, and the angle formed by the first housing 210 and the second housing 220 may be less than a predetermined angle (e.g., 10 degrees). The unfolded state may be a state in which the electronic device 101 is fully unfolded or partially unfolded, and an angle formed by the first housing 210 and the second housing 220 may be larger than or equal to the predetermined angle.

FIG. 2 illustrates an unfolded state of the electronic device 101 in which the first housing 210 and the second housing 220 form an angle of about 180°. FIG. 3 illustrates the folded state of the electronic device 101 in which the first housing 210 and the second housing 220 face each other and are parallel to each other. In the folded state, the first area 231a and the second area 231b of the first display 230 may be positioned to face each other, and the folding area 231c may be bent.

According to an embodiment, the folding of the electronic device 101 may be implemented in two types: "in-folding" in which the first area 231a and the second area 231b are folded to face each other; and "out-folding" in which the first area 231a and the second area 231b are folded to face in opposite directions. For example, in the in-folding state, the first area 231a and the second area 231b may be substantially concealed, and in the fully unfolded state, the first area 231a and the second area 231b may be disposed to face in substantially the same direction. For example, in the out-folding state, the first area 231a and the second area 231b may be disposed to face in opposite directions to be exposed to the outside, and in the fully unfolded state, the first area 231a and the second area 231b may be disposed to face in substantially the same direction.

According to an embodiment, the first display 230 may include a display panel (not shown) and a window member (not shown), and at least a portion of the first display 230 may be formed to be flexible. Although not illustrated separately, it will be easily understood by one of ordinary skill in the art that the first display 230 or the display panel includes various layers such as a light emitting layer, substrate(s) encapsulating the light emitting layer, an electrode or a wiring layer, and/or adhesive layer(s) bonding different adjacent layers. When the first display 230 (e.g., the folding area 231c) is deformed into a flat plate shape and a curved shape, relative displacement may occur between layers constituting the first display 230. The relative displacement according to the deformation of the first display 230 may increase as it is farther from the folding axis A and/or as the thickness of the first display 230 increases.

According to an embodiment, the window member, e.g., the thin film plate, may serve as a protective film to protect the display panel. As a protective film, the thin film plate may be formed of a material that protects the display panel from external impact, is resistant to scratches, and causes less creases in the folding area 231c even in repetitive folding and unfolding operations of the housings 210 and 220. For example, the material of the thin film plate may include a clear polyimide (CPI) film or ultra-thin glass (UTG).

According to an embodiment, the electronic device 101 may further include protective member(s) 206 or decorative covers(s) 218 and 228 disposed on at least a portion of the edge of the first display 230 on the front surface (e.g., the first surface 210a or the third surface 220a). As an example, the protective member 206 and the decorative covers 218 and 228 may be connected to each other to surround the edge of the first display 230. The protective member 206 or the decorative covers 218 and 228 may prevent at least a portion of an edge of the first display 230 from contacting a mechanical structure (e.g., the first housing 210 or the second housing 220). The protective member 206 or the decorative covers 218 and 228 may be visually exposed to the outside of the electronic device 101.

According to an embodiment, the decorative covers 218 and 228 and the protective member 206 may be connected to each other. As an example, the decorative covers 218 and 228 and the protective member 206 may be integrally formed. The decorative covers 218 and 228 may extend along the folding axis A. The decorative covers 218 and 228 may include a first decorative cover 218 disposed between a portion of an edge of the first area 231a of the first display 230 and an inner wall of the first housing 210. The decorative covers 218 and 228 may include a second decorative cover 228 disposed between a portion of an edge of the second area 231b of the first display 230 and an inner wall of the second housing 220. As an example, the first decorative cover 218 and the second decorative cover 228 may extend substantially side by side along the folding axis A.

According to an embodiment, the speaker hole 245 may be formed in the decorative cover 218 or the protective member 206 interposed between the edge of the first area 231a of the first display 230 and the inner wall of the first housing 210. As an example, the speaker hole 245 may be formed in the first decorative cover 218.

FIG. 4 is an exploded perspective view illustrating an electronic device 101 (e.g., the electronic device 101 as described with reference to Figures 1-3), according to an embodiment.

Referring to FIG. 4, according to an embodiment of the disclosure, the first display 230 may be visually exposed through a significant portion of the front surface of the electronic device 101. In an embodiment, the shape of the first display 230 may be formed to be substantially the same as the shape of the periphery of the front surface of the electronic device 101.

In FIG. 4, 'Y' may mean a length direction of the electronic device 101 in the second state (e.g., the unfolded state). Further, in an embodiment of the disclosure, '+Y' may mean the upward direction (or rotation, folding) of the electronic device 101 around the folding axis A of the electronic device 101, and '-Y' may mean the downward direction (or rotation, folding) of the electronic device 101 around the folding axis A of the electronic device 101.

According to an embodiment, the foldable housing of the electronic device 101 may include the first housing 210 and the second housing 220. According to an embodiment, the first housing 210 may include a first surface 210a and a second surface 210b facing in a direction opposite to the first surface 210a. The second housing 220 may include a third surface 220a and a fourth surface 220b facing in a direction opposite to the third surface 220a. The electronic device 101 or the foldable housing 210, 220, 260 may additionally or alternatively include a bracket assembly 217, 227. The bracket assembly 217, 227 may include a first bracket assembly 217 disposed in the first housing 210 and a second bracket assembly 227 disposed in the second housing 220. At least a portion of the bracket assembly 217, 227, e.g., at least a portion of the first bracket assembly 217 and at least a portion of the second bracket assembly 227, may serve as a plate for supporting the hinge structure 270.

According to an embodiment, various electric components may be disposed on the printed circuit board 216, 226. For example, a processor (e.g., the processor 120 of FIG. 1), memory (e.g., the memory 130 of FIG. 1), and/or an interface (e.g., the interface 177 of FIG. 1) may be mounted on the printed circuit board 216, 226. The processor may include one or more of, e.g., a central processing unit, an application processor, a graphic processing device, an image signal processing, a sensor hub processor, or a communication processor. The memory may include, e.g., a volatile or non-volatile memory. The interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the printed circuit boards 216, 226 may include a first printed circuit board 216 disposed on the side of the first bracket assembly 217 and a second printed circuit board 226 disposed on the side of the second bracket assembly 227. The first printed circuit board 216 and the second printed circuit board 226 may be disposed inside the space formed by the foldable housing 210, 220, 260, the bracket assembly 217, 227, the first rear cover 240 and/or the second rear cover 250. Components for implementing various functions of the electronic device 101 may be disposed on the first printed circuit board 216 and the second printed circuit board 226. For example, a processor may be disposed on the first printed circuit board 216, and an audio interface may be disposed on the second printed circuit board 226.

According to an embodiment, batteries 215, 225 may be disposed adjacent to the printed circuit board 216, 226 to supply power to the electronic device 101. At least a portion of the batteries 215, 225 may be disposed on substantially the same plane as the printed circuit board 216 or 226. According to an embodiment, a first battery 215 may be disposed adjacent to the first printed circuit board 216, and a second battery 225 may be disposed adjacent to the second printed circuit board 226. The batteries 215, 225 may be a device for supplying power to at least one component of the electronic device 101. The battery 189 may include, e.g., a primary cell which is not rechargeable, a secondary cell which is rechargeable, or a fuel cell. The batteries 215, 225 may be integrally or detachably disposed inside the foldable housing 210, 220, 260.

According to an embodiment, the hinge structure 270 may be a component to provide a folding axis (e.g., the folding axis A of FIG. 2) and rotatably connect or couple the foldable housing 210, 220, 260 and/or the bracket assembly 217, 227. The hinge structure 270 may include a first hinge structure 271 disposed on the side of the first printed circuit board 216 and a second hinge structure 272 disposed on the side of the second printed circuit board 226. The hinge structure 270 may be disposed between the first printed circuit board 216 and the second printed circuit board 226. According to an embodiment, the hinge structure 270 may be formed substantially integrally with at least a portion of the first bracket assembly 217 and at least a portion of the second bracket assembly 227.

In an embodiment, the hinge structure 270 may include a center bar 273. The center bar 273 may be disposed between the first hinge structure 271 and the second hinge structure 272. The center bar 273 may be connected to the first hinge structure 271 and the second hinge structure 272. The center bar 273 may be raised or lowered during the process in which the electronic device 101 changes between an unfolded state (e.g., the state of FIG. 2) and a folded state (e.g., the state of FIG. 3). The center bar 273 may support (e.g., may provide structural support to) the first display 230.

According to an embodiment, the electronic device 101 may include a first hinge plate 291 and a second hinge plate 292. The first hinge plate 291 and the second hinge plate 292 may be disposed on the hinge structure 270. The first hinge plate 291 and the second hinge plate 292 may be positioned between the first display 230 and the hinge structure 270. The first hinge plate 291 may be disposed at the first housing 210 side. The second hinge plate 292 may be disposed at the second housing 220 side. The first hinge plate 292 and the second hinge plate 292 may support the first display 230. The first hinge plate 291 and the second hinge plate 292 may be components of a 'hinge plate assembly'. For example, the hinge plate assembly may include the first hinge plate 291 and the second hinge plate 292.

According to an embodiment, a 'housing structure' may include the foldable housing 210, 220, 260 and may denote one resultant from assembling and/or combining at least one component disposed in the foldable housing 210, 220, 260. The housing structure may include a first housing structure and a second housing structure. For example, a component assembled to include at least one component among the first housing 210 and the first bracket assembly 217, the first printed circuit board 216, and the first battery 215 disposed inside the first housing 210 may be referred to as the 'first housing structure.' As another example, a component assembled to include at least one component among the second housing 220 and the second bracket assembly 227, the second printed circuit board 226, and the second battery 225 disposed inside the second housing 220 may be referred to as the 'second housing structure.' However, it should be noted that the 'first housing structure and the second housing structure' are not limited to the addition of the above-described components, but may add or omit various other components.

According to an embodiment, the flexible connection member 280 may be, e.g., a flexible printed circuit board (FPCB). The flexible connection member 280 may connect various electrical elements disposed on the first printed circuit board 216 and the second printed circuit board 226. To this end, the flexible connection member 280 may be disposed to cross the 'first housing structure' and the 'second housing structure'. According to an embodiment, the flexible connection member 280 may be disposed to cross at least a portion of the hinge structure 270. According to an embodiment, the flexible connection member 280 may be configured to connect the flexible printed circuit board 216 and the second printed circuit board 226 across the hinge structure 270 along a direction parallel to, e.g., the y axis of FIG. 4. For example, the flexible connection member 280 may include a central portion 281 disposed on one side (e.g., an upper side) of the hinge cover 260. For example, the flexible connection member 280 may include a hinge cover 260 and a first curved portion 282 disposed on one side (e.g., an upper side) of the first bracket assembly 217. For example, the flexible connection member 280 may include a hinge cover 260 and a second curved portion 283 disposed on one side (e.g., an upper side) of the second bracket assembly 227. The first curved portion 282 and the second curved portion 283 may have a shape convex toward one side (e.g., an upper side) when the electronic device 101 is in the unfolded state (e.g., the state of FIG. 2). For example, the flexible connection member 280 may include a first extension 284 that is connected to the first curved portion 282, passes through the first housing 210 (e.g., the first bracket assembly 217), and extends from the other side (e.g., a lower side) of the first housing 210 (e.g., the first bracket assembly 217). For example, the flexible connection member 280 may include a second extension 285 that is connected to the second curved portion 283, passes through the second housing 220 (e.g., the second bracket assembly 227), and extends from the other side (e.g., a lower side) of the second housing 220 (e.g., the second bracket assembly 227). A space (hereinafter, referred to as a 'wiring space') surrounded by at least a portion of the first hinge structure 271, at least a portion of the second hinge structure 272, and at least a portion of the hinge cover 260 may be formed in a position adjacent to the first hinge structure 271 and the second hinge structure 272. According to an embodiment, at least a portion 281, 282, 283 of the flexible connection member 280 may be disposed in the wiring space.

According to an embodiment, the electronic device 101 may include a first holder assembly 286 and a second holder assembly 287. The first holder assembly 286 and the second holder assembly 287 may be disposed on one side (e.g., an upper side) of the flexible connection member 280. The first holder assembly 286 may be fixed to the first housing 210 (e.g., the first bracket assembly 217), and the second holder assembly 287 may be fixed to the second housing 220 (e.g., the second bracket assembly 227). The first holder assembly 286 and the second holder assembly 287 may fix the flexible connection member 280 to the first housing 210 and the second housing 220, respectively.

According to an embodiment, the hinge cover 260 may be a component that covers at least a portion of the hinge structure 270 or the wiring space. In an embodiment, the hinge cover 260, together with the hinge structure 270, may form the wiring space and protect components (e.g., at least a portion 283 of the flexible connection member 280) disposed in the wiring space from external impact. According to an embodiment, the hinge cover 260 may be disposed between the first housing 210 and the second housing 220. In the electronic device 101 which is of an in-folding type, the hinge cover 260 may be at least partially concealed by the foldable housing 210, 220, 260. For example, in the folded state, the hinge cover 260 may be visually exposed to the external space between the rear surface (e.g., the first back cover 240) of the first housing 210 and the back cover (e.g., the second back cover 250) of the second housing 220 and, in the unfolded state, the hinge cover 360 may be substantially received inside the first housing 210 or the second housing 220 to be visually concealed.

According to an embodiment, the antenna module 219, 229 (e.g., the antenna module 197 of FIG. 1) may be disposed between the rear cover 240, 250 and the batteries 215, 225. According to an embodiment, the antenna module 219, 229 may include a first antenna module 219 disposed on the side of the first housing 210 and a second antenna module 229 disposed on the side of the second housing 220. The antenna module 219, 229 may include, e.g., a near field communication (NFC) antenna, a wireless charging antenna, and/or a magnetic secure transmission (MST) antenna, performing short-range communication with an external device or wirelessly transmitting/receiving power required for charging. In an embodiment, an antenna structure may be formed by a portion or combination of the side bezel structure of the foldable housing 210, 220, 260 and/or bracket assembly.

According to an embodiment, the rear cover 240, 250 may include a first rear cover 240 and a second rear cover 250. The rear cover 240, 250 may be combined with the foldable housing 210, 220, 260 to protect the above-described components (e.g., the printed circuit board 216, 226, the batteries 215, 225, the flexible connection member 280, or the antenna module 219, 229) disposed in the foldable housing 210, 220, 260. As described above, the rear cover 240, 250 may be formed substantially integrally with the foldable housing 210, 220, 260.

According to an embodiment, the protective member 206 and/or the decorative covers 218 and 228 may protect at least a portion of the edge of the first display 230. The protective member 206 may be disposed between the edge of the first area 231a (see FIG. 2) of the first display 230 and the inner wall of the first housing 210 and/or between the edge of the second area 231b (see FIG. 2) of the first display 230 and the inner wall of the second housing 220 to prevent the edge of the first display 230 from directly contacting the inner walls of the housings 210 and 220.

In the disclosure, a type of electronic device that is folded (e.g., folded up and down) with respect to the horizontally extended folding axis F is described, but the disclosure is not limited thereto, and the contents of the disclosure described below may be applied equally and/or similarly to various types of foldable electronic devices. For example, the contents of the disclosure described below may be applied equally and/or similarly to a type of electronic device (e.g., a 'fold' type of foldable electronic device) that is folded (e.g., folded left and right) with respect to a vertically extended folding axis or a type of electronic device (e.g., a multi-foldable electronic device) that includes multiple folding axes. For example, if the folding axis of each type of foldable electronic device corresponds to the 'folding axis' of the content described below, the details described in the disclosure below may be applied equally and/or similarly to each type of foldable electronic device.

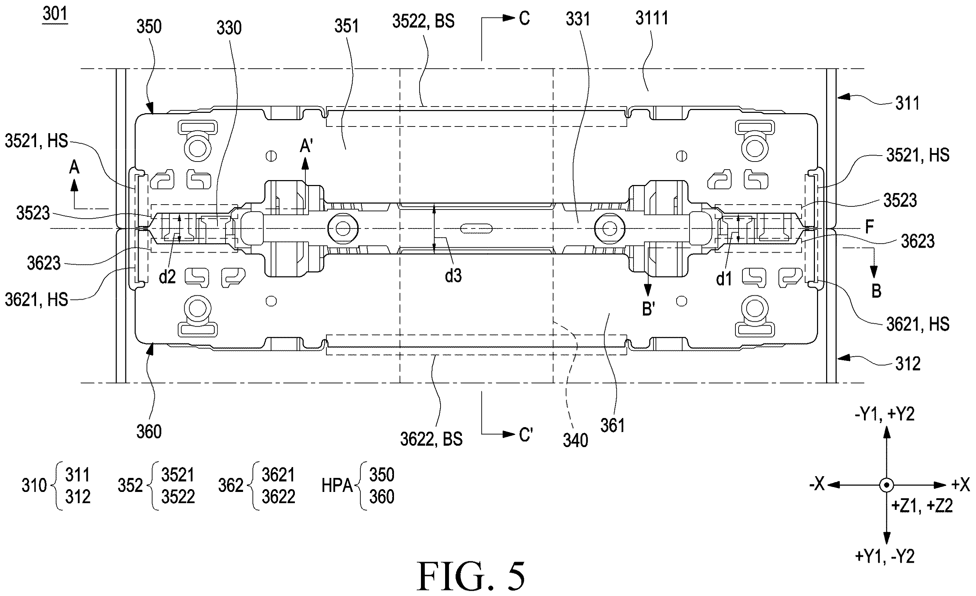

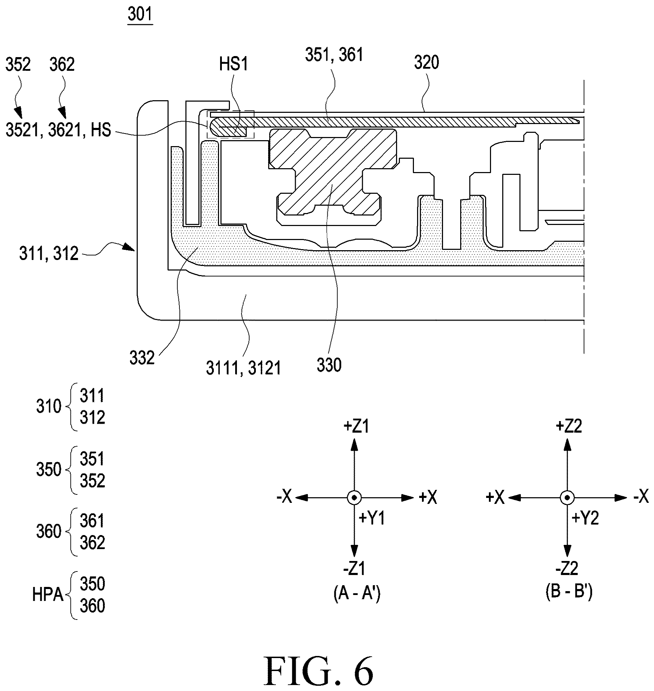

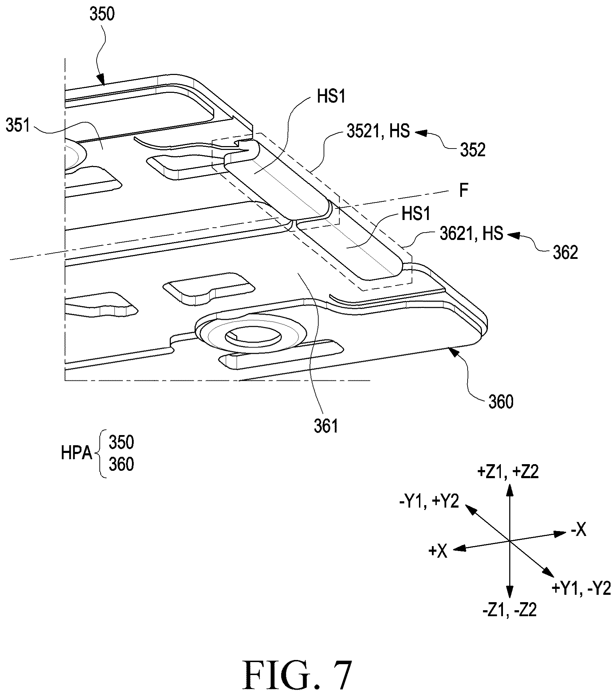

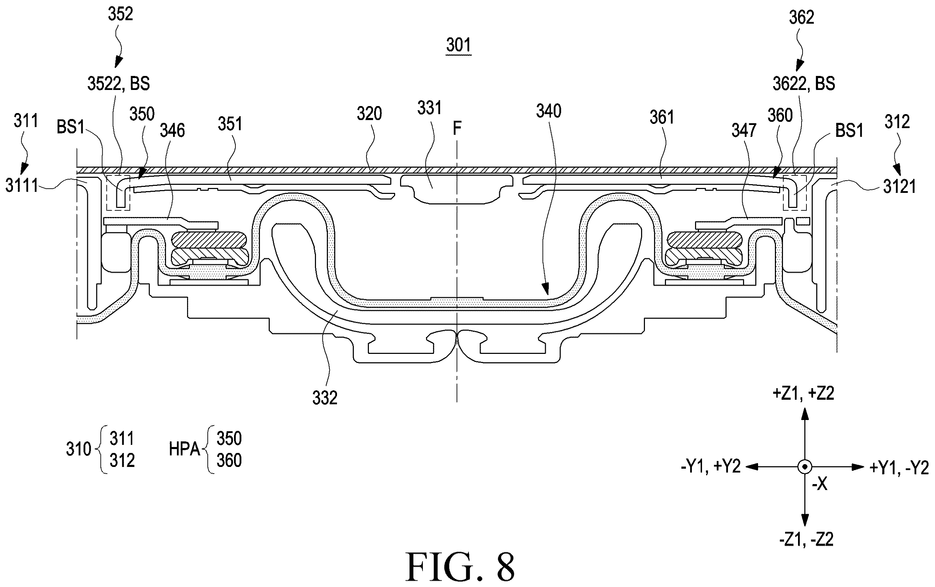

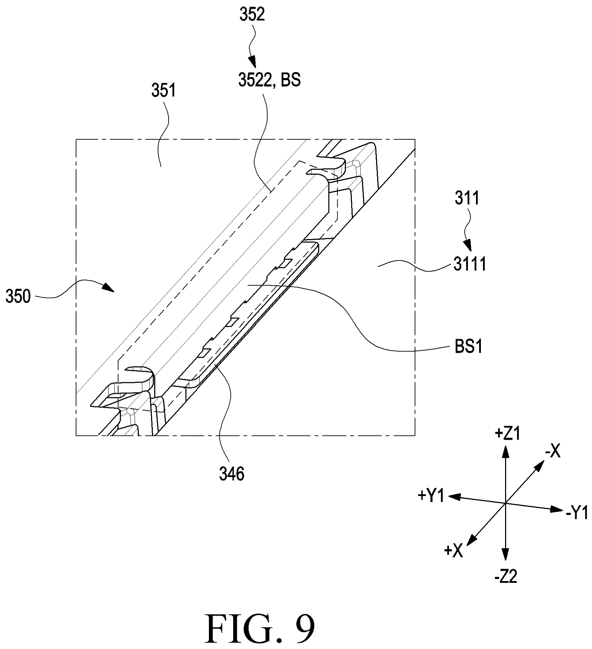

FIG. 5 is a plan view illustrating a partial configuration of an electronic device according to an embodiment of the disclosure. FIG. 6 simultaneously illustrates a cross-sectional view taken along line A-A' of FIG. 5 and a cross-sectional view taken along line B-B' of FIG. 5. FIG. 7 is an enlarged perspective view illustrating a partial configuration of an electronic device according to an embodiment of the disclosure. FIG. 8 is a cross-sectional view illustrating a partial configuration of an electronic device according to an embodiment of the disclosure, taken along line C-C' of FIG. 5. FIG. 9 is an enlarged perspective view illustrating a partial configuration of an electronic device according to an embodiment of the disclosure.

Specifically, FIG. 5 is a plan view illustrating areas of the first hinge plate 350 and the second hinge plate 360 when the foldable electronic device 301 is in an unfolded state (e.g., the state of FIG. 2). FIG. 6 is a cross-sectional view illustrating both a first perpendicular side reinforcement portion 3521 area of the first hinge plate 350 and a second perpendicular side reinforcement portion 3621 area of the second hinge plate 360. FIG. 7 is a perspective view illustrating a rear surface of a first perpendicular side reinforcement portion 3521 area of the first hinge plate 350 and a second perpendicular side reinforcement portion 3621 area of the second hinge plate 360. FIG. 8 is a cross-sectional view illustrating areas of the first hinge plate 350 and the second hinge plate 360 when the foldable electronic device 301 is in an unfolded state (e.g., the state of FIG. 2). FIG. 9 is a perspective view illustrating an area of a first distal reinforcement portion 3522 of the first hinge plate 350.

The detailed configuration of the foldable electronic device 301 according to an embodiment of the disclosure not described below may be the same as the detailed configuration of the electronic device 101 according to an embodiment of the disclosure described with reference to FIGS. 1 to 4.

Hereinafter, the foldable electronic device 301 according to an embodiment of the disclosure may include a housing 310, a flexible display 320, a hinge module 330, a hinge cover 332, a flexible circuit board 340, a first hinge plate 350, and a second hinge plate 360, but some of them may be excluded and implemented, and other additional components are not excluded.

Hereinafter, the 'first lateral direction' may mean a direction parallel to the folding axis F, and may mean the +X direction which is the right direction with respect to FIG. 5. The 'second lateral direction' is a direction opposite to the first lateral direction (+X direction), and may mean the -X direction, which is the left direction with respect to FIG. 5. The 'third lateral direction' is a lateral direction crossing the first lateral direction (+X direction) and/or the second lateral direction (-X direction), and may mean the +Y1 direction, which is a direction toward the folding axis F with respect to the first hinge plate 350 in FIG. 5. The 'fourth lateral direction' is a direction opposite to the third lateral direction (+Y1 direction), and may mean the -Y1 direction, which is a direction away from the folding axis F with respect to the first hinge plate 350 in FIG. 5. The fifth lateral direction (+Y2 direction) is a lateral direction crossing the first lateral direction (+X direction) and/or the second lateral direction (-X direction), and may mean the +Y2 direction, which is a direction toward the folding axis F with respect to the second hinge plate 360 in FIG. 5. When the foldable electronic device 301 is in the unfolded state (e.g., the state of FIG. 2), the fourth lateral direction (-Y1 direction) and the fifth lateral direction (+Y2 direction) may be the same. The 'sixth lateral direction' is a direction opposite to the fifth lateral direction (+Y2 direction), and may mean the -Y2 direction, which is a direction away from the folding axis F with respect to the second hinge plate 360 in FIG. 5. When the foldable electronic device 301 is in the unfolded state (e.g., the state of FIG. 2), the third lateral direction (+Y1 direction) and the sixth lateral direction (-Y2 direction) may be the same.

Hereinafter, the "first thickness direction" is a direction toward the flexible display 320 among the thickness directions of the first housing 311, and may mean the +Z1 direction with respect to FIG. 5. The 'second thickness direction' is a direction opposite to the first thickness direction (+Z1 direction), and may mean the -Z1 direction with respect to FIG. 8. The 'third thickness direction' is a direction toward the flexible display 320 among the thickness directions of the second housing 312 and may mean the +Z2 direction with respect to FIG. 5. The first thickness direction (+Z1 direction) and the third thickness direction (+Z2 direction) may mean the same direction when the foldable electronic device 301 is in the unfolded state (e.g., the state of FIG. 2), and may mean directions facing each other when the foldable electronic device 301 is in the folded state (e.g., the state of FIG. 3). The 'fourth thickness direction' is a direction opposite to the third thickness direction (+Z2 direction), and may mean the -Z2 direction with respect to FIG. 8. The second thickness direction (-Z1 direction) and the fourth thickness direction (-Z2 direction) may mean the same direction when the foldable electronic device 301 is in the unfolded state (e.g., the state of FIG. 2), and may mean directions away from each other when the foldable electronic device 301 is in the folded state (e.g., the state of FIG. 3).

Hereinafter, a specific structure not described in relation to the second housing 312 area may be understood as a structure symmetrical with the specific structure described in relation to the first housing 311 area with respect to the folding axis F.

According to an embodiment, the foldable electronic device 301 may include a foldable housing 310. The foldable housing 310 may include a first housing 311 (e.g., the first housing 210 of FIGS. 2 to 4) and a second housing 312 (e.g., the second housing 220 of FIGS. 2 to 4) rotatably coupled by the hinge module 330.

According to an embodiment, the first housing 311 may be disposed on one side (e.g., the side in the fourth lateral direction (-Y1 direction)) of the folding axis F with respect to the folding axis F. The first housing 311 may be connected to the hinge module 330. The first housing 311 may be referred to as a 'housing.'

According to an embodiment, the first housing 311 may include a first supporting member 3111 (e.g., the first bracket assembly 217 of FIG. 4). For example, the first supporting member 3111 may be understood as being a portion of the first housing 311. For example, the first supporting member 3111 is a component that is provided separately from the first housing 311, and may be understood as a component that is disposed within the first housing 311 and coupled to the first housing 311. The first supporting member 3111 may be configured to support the flexible display 320 and the hinge module 330. For example, the flexible display 320 and/or the hinge module 330 may be seated on the first supporting member 3111. The first supporting member 3111 may be referred to as a 'supporting member.'

According to an embodiment, the second housing 312 may be rotatably coupled to the first housing 311. The second housing 312 may be disposed on the other side (e.g., the side in the sixth lateral direction (-Y2 direction)) of the folding axis F with respect to the folding axis F. The second housing 312 may be connected to the hinge module 330. The second housing 312 may rotate about the folding axis F with respect to the first housing 311, and accordingly, the foldable electronic device 301 may be switched into the unfolded state (e.g., the state of FIG. 2) or the folded state (e.g., the state of FIG. 3). The second housing 312 may be referred to as a 'housing.'

According to an embodiment, the second housing 312 may include a second supporting member 3121 (e.g., the second bracket assembly 227 of FIG. 4). For example, the second supporting member 3121 may be understood as being a portion of the second housing 312. For example, the second supporting member 3121 is a component provided separately from the second housing 312, and may be understood as a component disposed within the second housing 312 and coupled to the second housing 312. The second supporting member 3121 may be configured to support the flexible display 320 and the hinge module 330. For example, the flexible display 320 and/or the hinge module 330 may be seated on the second supporting member 3121. The second supporting member 3121 may be referred to as a 'supporting member.'

According to an embodiment, the foldable electronic device 301 may include a flexible display 320 (e.g., the first display 230 of FIGS. 2 to 4). The flexible display 320 may be disposed on the first housing 311, the second housing 312, the first hinge plate 350 and/or the second hinge plate 360. The flexible display 320 may be disposed across the first housing 311 and the second housing 312. For example, the flexible display 320 may be disposed on a surface of the first housing 311 facing the first thickness direction (+Z1 direction) and a surface of the second housing 312 facing the third thickness direction (+Z2 direction). For example, the flexible display 320 may be disposed on the first supporting member 3111 (e.g., the first bracket assembly 217 of FIG. 4) forming a portion of the first housing 311 and the second supporting member 3121 (e.g., the second bracket assembly 227 of FIG. 4) forming a portion of the second housing 312.

According to an embodiment, the flexible display 320 may be supported by the first hinge plate 350 and/or the second hinge plate 360. For example, the folding area (e.g., the folding area 231c of FIG. 2) of the flexible display 320 and a portion adjacent thereto may be disposed on the surface facing the first thickness direction (+Z1 direction) of the first hinge plate 350 and the third thickness direction (+Z2 direction) of the second hinge plate 360 and may be supported by the first hinge plate 350 in the first thickness direction (+Z1 direction) and be supported by the second hinge plate 360 in the third thickness direction (+Z2 direction).

According to an embodiment, the foldable electronic device 301 may include a hinge module 330 (e.g., the hinge structure 270 of FIG. 4). The hinge module 330 may be connected to the first housing 311 and the second housing 312. The hinge module 330 may rotatably couple the first housing 311 and the second housing 312 with respect to the folding axis F.

According to an embodiment, the foldable electronic device 301 may include a hinge cover 332 (e.g., the hinge cover 260 of FIGS. 3 and 4). The hinge cover 332 may be disposed between the first housing 311 and the second housing 312. The hinge cover 332 may be disposed between the first housing 311 and the hinge module 330. The hinge cover 332 may be disposed between the second housing 312 and the hinge module 330. The hinge cover 332 may be disposed in the second thickness direction (-Z1 direction) of the first hinge plate 350. The hinge cover 332 may be disposed in the fourth thickness direction (-Z2 direction) of the second hinge plate 360. At least a portion of the hinge cover 332 may be disposed on the side in the second thickness direction (-Z1 direction) and/or the fourth thickness direction (-Z2 direction) of the hinge module 330. The hinge cover 332 may be disposed to surround the hinge module 330. For example, the hinge cover 332 may cover at least a portion of the hinge module 330.

According to an embodiment, the foldable electronic device 301 may include a flexible circuit board 340 (e.g., the flexible connection member 280 of FIG. 4). The flexible circuit board 340 may be disposed in the first housing 311 and the second housing 312. For example, the flexible circuit board 340 may be disposed across the first housing 311 to the second housing 312.

According to an embodiment, referring to FIG. 8, at least a portion of the flexible circuit board 340 may be disposed at a space between the hinge plate assembly HPA and the hinge cover 332. For example, at least a portion of the flexible circuit board 340 may be disposed between the first housing 311 and the first hinge plate 350. According to an embodiment, at least a portion of the flexible circuit board 340 may be disposed between the second housing 312 and the second hinge plate 360. For example, the flexible circuit board 340 may be disposed on the side in the first thickness direction (+Z1 direction) of the first supporting member 3111 and the third thickness direction (+Z2 direction) of the second supporting member 3121 in an area overlapping the first hinge plate 350 and/or the second hinge plate 360. For example, in an area that does not overlap the first hinge plate 350 and/or the second hinge plate 360, it may be disposed on the side in the second thickness direction (-Z1 direction) of the first supporting member 3111 and the fourth thickness direction (-Z2 direction) of the second supporting member 3121. The flexible circuit board 340 may extend through the first supporting member 3111 and the second supporting member 3121.

According to an embodiment, the flexible circuit board 340 may be at least partially covered by the first hinge plate 350 and/or the second hinge plate 360. For example, a portion of the flexible circuit board 340 may be covered in the first thickness direction (+Z1 direction) by the first hinge plate 350. For example, a portion of the flexible circuit board 340 may be covered in the third thickness direction (+Z2 direction) by the second hinge plate 360.

According to an embodiment, referring to FIG. 5, the portion of the flexible circuit board 340 covered by the first hinge plate 350 and/or the second hinge plate 360 may be disposed in the central area of the first housing 311 and the second housing 312 with respect to the direction where the folding axis F extends (e.g., the first lateral direction (+X direction) and/or the second lateral direction (-X direction)). However, without limitations thereto, the portion of the flexible circuit board 340 covered by the first hinge plate 350 and/or the second hinge plate 360 may be disposed at a position skewed to one side of the first housing 311 and the second housing 312 with respect to the direction where the folding axis F extends.

According to an embodiment, the foldable electronic device 301 may include a first holder assembly 346. The first holder assembly 346 may be disposed between the first housing 311 and the first hinge plate 350. The first holder assembly 346 may be fixed to the first housing 311. The first holder assembly 346 may fix the flexible circuit board 340 to the first housing 311 (e.g., the first supporting member 3111). In an embodiment, the first holder assembly 346 may be a component of the first housing 311. For example, the first housing 311 may include a first holder assembly 346.

According to an embodiment, the foldable electronic device 301 may include a second holder assembly 347. The second holder assembly 347 may be disposed between the second housing 312 and the second hinge plate 360. The second holder assembly 347 may be fixed to the second housing 312. The second holder assembly 347 may fix the flexible circuit board 340 to the second housing 312 (e.g., the second supporting member 3121). In an embodiment, the second holder assembly 347 may be a component of the second housing 312. For example, the second housing 312 may include a second holder assembly 347.

According to an embodiment, the foldable electronic device 301 may include a hinge plate assembly HPA. The hinge plate assembly HPA may be disposed between the hinge module 330 and the flexible display 320. The hinge plate assembly HPA may cover the hinge module 330 in the first thickness direction (+Z1 direction) and/or the third thickness direction (+Z2 direction). The hinge plate assembly HPA may support the flexible display 320 in the first thickness direction (+Z1 direction) and/or the third thickness direction (+Z2 direction).

According to an embodiment, the hinge plate assembly HPA may include a first hinge plate 350 (e.g., the first hinge plate 291 of FIG. 4). The first hinge plate 350 may be disposed on the side of the first housing 311. The first hinge plate 350 may be disposed at a position adjacent to the folding axis F. The first hinge plate 350 may be disposed between the first housing 311 and the flexible display 320. For example, the first hinge plate 350 may be disposed on the side in the first thickness direction (+Z1 direction) of the first housing 311. The first hinge plate 350 may be fixed to a surface of the first housing 311 facing the first thickness direction (+Z1 direction). For example, the first hinge plate 350 may be fixed to the hinge module 330 and/or the first supporting member 3111. The first hinge plate 350 may cover at least a portion of the hinge module 330. The first hinge plate 350 may be referred to as a 'hinge plate.'

According to an embodiment, the first hinge plate 350 may support the flexible display 320. For example, the first hinge plate 350 may support the flexible display 320 in the first thickness direction (+Z1 direction). For example, the first hinge plate 350 may support the folding area (e.g., the folding area 231c of FIG. 2) of the flexible display 320 and/or an area adjacent thereto.

According to an embodiment, referring to FIGS. 5 to 9, the first hinge plate 350 may include a first body portion 351. The first body portion 351 may have a plate shape. The first body portion 351 may be a portion in direct contact with the flexible display 320. The first body portion 351 may have a flat plate shape, or may include a curved or bent portion, as illustrated in FIG. 8. The first body portion 351 may be referred to as a 'body portion.'

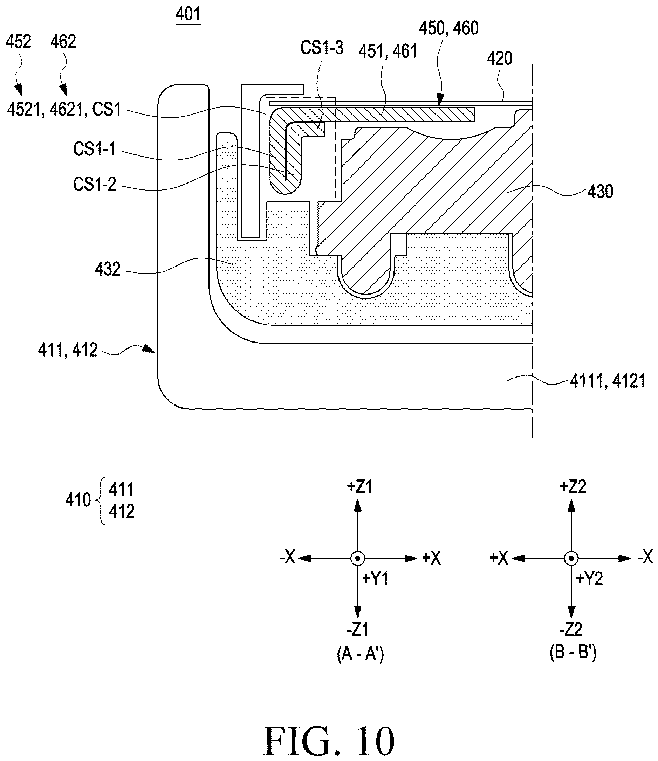

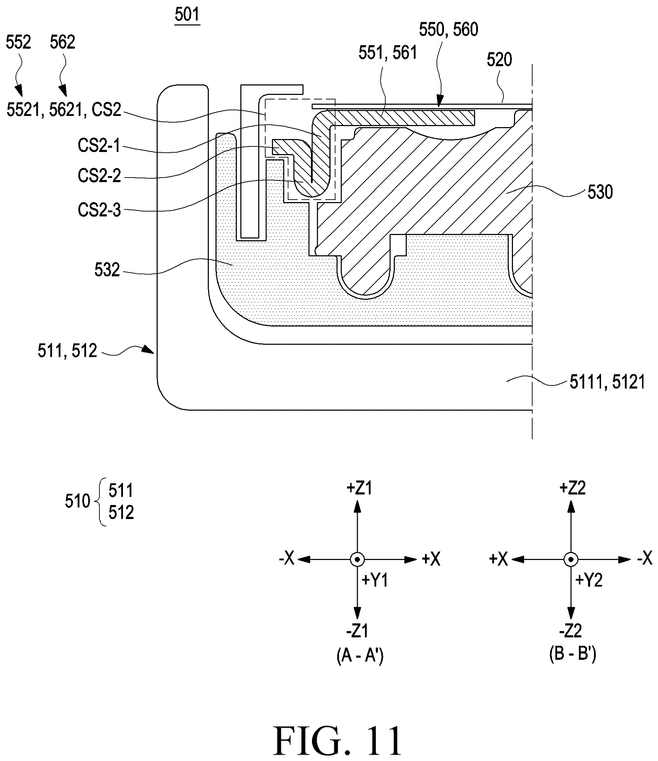

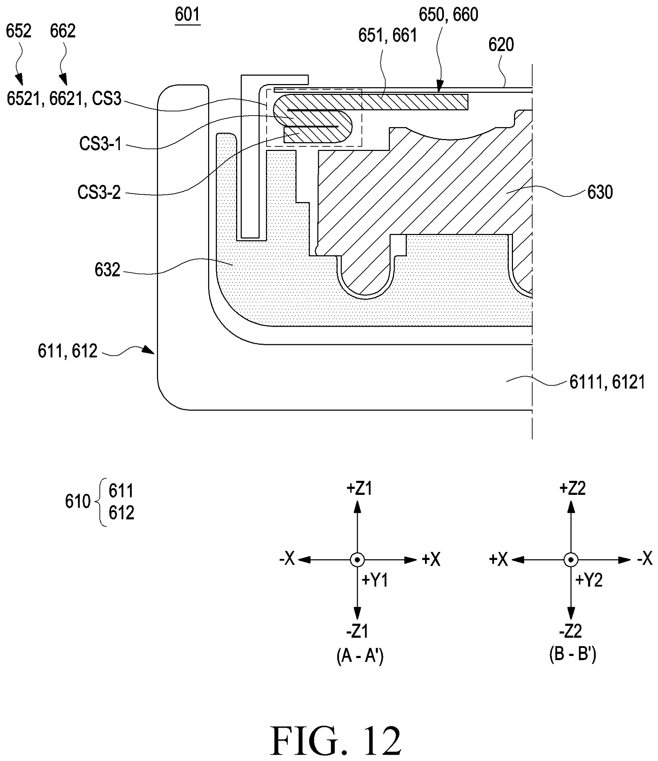

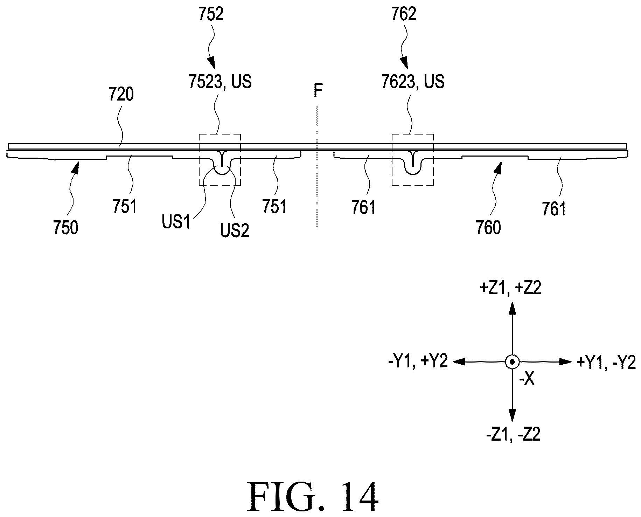

According to an embodiment, the first hinge plate 350 may include a first reinforcement portion 352. The first reinforcement portion 352 may be disposed in at least a partial area of the first body portion 351. The first reinforcement portion 352 may be formed by bending a portion of the first hinge plate 350. The first reinforcement portion 352 may include a part protruding in a direction (e.g., the second thickness direction (-Z1 direction) perpendicular to the first body portion 351. The protruding part may mean at least one of a portion of the hemming structure HS illustrated in FIGS. 6 and 7 (e.g., a portion HS1 hemmed and extended in the hemming structure HS), a portion of a bending structure BS illustrated in FIGS. 8 and 9 (e.g., a portion BS1 bent and extended in the bending structure BS), a portion of the first composite structure CS1 illustrated in FIG. 10 (e.g., a first portion CS1-1, a second portion CS1-2, and/or a third portion CS1-3 of the first composite structure CS1), a portion of the second composite structure CS2 illustrated in FIG. 11 (e.g., a first portion CS2-1, a second portion CS2-2, and/or a third portion CS2-3 of the second composite structure CS2), a portion of the third composite structure CS3 illustrated in FIG. 12 (e.g., a first portion CS3-1 and/or a second portion CS3-2 of the third composite structure CS3), or a portion of the U-shaped structure US illustrated in FIG. 14 (e.g., a first portion US1 and/or a second portion US2 of the U-shaped structure US).

According to an embodiment, the first reinforcement portion 352 may be provided separately from the first body portion 351 and fixed to the first body portion 351. For example, the first reinforcement portion 352 may be provided in a plate shape extending in a direction parallel to the first body portion 351, and may overlap and be fixed to the first body portion 351. For example, the first reinforcement portion 351 may be provided in a plate shape extending in a direction (e.g., the first thickness direction (+Z1 direction) and/or the second thickness direction (-Z1 direction) perpendicular to the first body portion 351, and may be fixed to the first body portion 351. According to an embodiment, a thickness of a portion of the first hinge plate 350 where the first reinforcement portion 352 is disposed may be larger than a thickness of a portion of the first hinge plate 350 where the first reinforcement portion 352 is not disposed. The first reinforcement portion 352 may be referred to as a 'reinforcement portion.'

According to an embodiment, the first reinforcement portion 352 may reinforce the structural rigidity of the first hinge plate 350 to alleviate the deformation of the first body portion 351 from the external pressure applied to the first body portion 351. Specifically, an empty space may be formed between the first hinge plate 350 and the hinge module 330 disposed under the first hinge plate 350 (e.g., the side in the second thickness direction (-Z1 direction) of the first hinge plate 350), the flexible circuit board 340, and/or the first supporting member 3111. When an external pressure or external impact is applied to the first hinge plate 350, the first hinge plate 350 may be bent or pressed to cause deformation of the first hinge plate 350. Deformation of the first hinge plate 350 may cause deformation of the flexible display 320 supported by the first hinge plate 350. If the deformation of the flexible display 320 increases, cracks or leakage current may occur in the flexible display 320, resulting in bit loss, or breakage of the vacuum state of the thin film encapsulation. According to an embodiment, the first reinforcement portion 352 may structurally reinforce the first hinge plate 350 to alleviate, reduce or prevent bending deformation of the first hinge plate 350, and further prevent, alleviate or reduce damage to the flexible display 320 due to bending deformation of the first hinge plate 350.

According to an embodiment, the first reinforcement portion 352 may configured to be supported in the first thickness direction (+Z1 direction), in response to the external pressure applied to the first hinge plate 350, by at least one of the internal structure of the first housing 311 disposed near the first enhancement portion 352, the hinge module 330, or the hinge cover 332 to alleviate deformation of the first hinge plate 350 by the external pressure. That is, one or more of the internal structure of the first housing, the hinge module, or the hinge cover, may support the first reinforcement portion. The first reinforcement portion may be in contact with one or more of these components. The first reinforcement portion may be in contact with one or more of these components when external pressure is applied to the first hinge plate such that the first reinforcement portion is supported when under external pressure. For example, the first reinforcement portion 352 may be supported in the first thickness direction (+Z1 direction) by at least one of the first supporting member 3111, the first holder assembly 346, the hinge module 330, or the hinge cover 332 of the first housing 311. For example, the internal structure of the first housing 311 described above may be at least one of the first supporting member 3111 configured to support the flexible display 320 and the hinge module 330 positioned on the side of the first housing 311 or the first holder assembly 346 configured to fix the flexible circuit board 340 to the first supporting member 3111. Depending on the position where the first reinforcement portion 352 is formed, the component supporting the first reinforcement portion 352 may differ. As the first reinforcement portion 352 is supported in the first thickness direction (+Z1 direction), it is possible to prevent the first hinge plate 350 from being bent in the second thickness direction (-Z1 direction) by external pressure applied to the first hinge plate 350.

According to an embodiment, the first reinforcement portion 352 may be formed on at least a portion of an edge of the first hinge plate 350. For example, the first reinforcement portion 352 may be disposed on an edge facing the first lateral direction (+X direction) of the first body portion 351, an edge facing the second lateral direction (-X direction), and/or an edge facing the direction (e.g., the fourth lateral direction (-Y1 direction)) away from the folding axis F. However, without limitations thereto, the first reinforcement portion 352 may be additionally or alternatively disposed in the central area of the first body portion 351 and/or the edge facing the folding axis F (e.g., the edge facing the third lateral direction (+Y1 direction)).

According to an embodiment, the first reinforcement portion 352 may include a first perpendicular side reinforcement portion 3521. The first perpendicular side reinforcement portion 3521 may be disposed on at least one of two opposite edges of the first hinge plate 350. For example, the first perpendicular side reinforcement portion 3521 may be disposed on an edge perpendicular to the folding axis F among the edges of the first hinge plate 350. For example, the first perpendicular side reinforcement portion 3521 may be disposed on each of the edges of the first body portion 351 facing the first lateral direction (+X direction) and the second lateral direction (-X direction). The first perpendicular side reinforcement portion 3521 may structurally reinforce two opposite edges of the first hinge plate 350. The first perpendicular side reinforcement portion 3521 may be referred to as a 'perpendicular side reinforcement portion.'

According to an embodiment, the first perpendicular side reinforcement portion 3521 may be supported in the first thickness direction (+Z1 direction) by another member disposed on the side in the second thickness direction (-Z1 direction) of the first perpendicular side reinforcement portion 3521. For example, the first perpendicular side reinforcement portion 3521 may be supported by the hinge module 330 and/or the hinge cover 332 in the first thickness direction (+Z1 direction). Referring to FIG. 6, a portion of the first perpendicular side reinforcement portion 3521 may be disposed on the hinge cover 332, and another portion of the first perpendicular side reinforcement portion 3521 may be disposed on the hinge module 330. When an external pressure is applied to the portion where the first perpendicular side reinforcement portion 3521 is disposed, the first perpendicular side reinforcement portion 3521 may be supported by the hinge module 330 and/or the hinge cover 332 in the first thickness direction (+Z1 direction). According to an embodiment, when the first perpendicular side reinforcement portion 3521 is disposed on the first housing 311, the first perpendicular side reinforcement portion 3521 may be supported by the first housing 311 in the first thickness direction (+Z1 direction). Accordingly, bending deformation of the first hinge plate 350 due to external pressure may be prevented in the portion where the first perpendicular side reinforcement portion 3521 is disposed.

According to an embodiment, the first perpendicular side reinforcement portion 3521 may include a hemming structure HS. However, without limitations thereto, the first perpendicular side reinforcement portion 3521 may include at least one of a bending structure BS, a first composite structure illustrated in FIG. 10 (e.g., the first composite structure CS1 of FIG. 10), a second composite structure illustrated in FIG. 11 (e.g., the second composite structure CS2 of FIG. 11), or a third composite structure illustrated in FIG. 12 (e.g., the third composite structure CS3 of FIG. 12). The first perpendicular side reinforcement portion 3521 includes a structure to enhance the strength of the perpendicular side reinforcement portion and provide greater structural support for the first hinge plate.

According to an embodiment, the first perpendicular side reinforcement portion 3521 may be disposed adjacent to the folding axis F. For example, the first perpendicular side reinforcement portion 3521 may extend in a direction (e.g., the fourth lateral direction (-Y1 direction)) away from the folding axis F, from an end portion facing the folding axis F of each of the edges facing the first lateral direction (+X direction) and the second lateral direction (-X direction) of the first body portion 351 (e.g., an end portion facing the third lateral direction (+Y1 direction)). For example, the first perpendicular side reinforcement 3521 may be understood as being disposed in the lower left and lower right areas of the first body portion 351 with respect to FIG. 5. Accordingly, the structural rigidity of a portion adjacent to the folding axis F of the end portion areas on two opposite sides of the first hinge plate 350, which is highly likely to be deformed by external impact and/or external pressure, of the first hinge plate 350 may be reinforced.

According to an embodiment, the first reinforcement portion 352 may include a first horizontal side reinforcement portion 3522; 3523. The first horizontal side reinforcement portion 3522; 3523 may be disposed on at least a portion of an edge which is parallel to the folding axis F among the edges of the first hinge plate 350. For example, the first horizontal side reinforcement portion 3522 may be disposed on at least a portion of the edge facing the direction (e.g., the fourth lateral direction (-Y1 direction)) away from the folding axis F of the first hinge plate 350, and the first horizontal side reinforcement portion 3523 may be disposed on at least a portion of the edge (e.g., the edge facing the third lateral direction (+Y1 direction)) facing the folding axis F of the first hinge plate 350.

According to an embodiment, a portion of the first horizontal side reinforcement portion 3522; 3523 may be supported by at least one of the hinge module 330, the first holder assembly 346, and the first supporting member 3111 of the first housing 311. For example, the first horizontal side reinforcement portion 3522 disposed on an edge facing the direction (e.g., the fourth lateral direction (-Y1 direction)) away from the folding axis F of the first hinge plate 350 may be supported in the first thickness direction (+Z1 direction) by the first holder assembly 346 and/or the first supporting member 3111. For example, the first horizontal side reinforcement portion 3522 disposed on the edge facing the folding axis F of the first hinge plate 350 (e.g., the edge facing the third lateral direction (+Y1 direction)) may be supported by the hinge module 330 in the first thickness direction (+Z1 direction).

According to an embodiment, the first horizontal side reinforcement portion 3522; 3523 may include a first distal reinforcement portion 3522 and a first proximal reinforcement portion 3523. For example, the first horizontal side reinforcement 3522 disposed on the edge facing the direction (e.g., the fourth lateral direction (-Y1 direction)) away from the folding axis F of the first hinge plate 350 may be referred to as the first distal reinforcement portion 3522. For example, the first horizontal side reinforcement portion 3523 disposed on the edge (e.g., the edge facing the third lateral direction (+Y1 direction)) facing the folding axis F of the first hinge plate 350 may be referred to as a first proximal reinforcement portion 3523.

According to an embodiment, the first distal reinforcement portion 3522 may be disposed on the edge facing the direction (e.g., the fourth lateral direction (-Y1 direction)) away from the folding axis F of the first body portion 351. The first distal reinforcement portion 3522 may structurally reinforce the edge facing the direction away from the folding axis F of the first hinge plate 350. The first distal reinforcement portion 3522 may be referred to as a 'distal reinforcement portion.'

According to an embodiment, the first distal reinforcement portion 3522 may be supported in the first thickness direction (+Z1 direction) by another member disposed in the second thickness direction (-Z1 direction) of the first distal reinforcement portion 3522. For example, the first distal reinforcement portion 3522 may be supported by the first holder assembly 346 in the first thickness direction (+Z1 direction). Referring to FIGS. 8 and 9, the first distal reinforcement portion 3522 may be disposed on the first holder assembly 346 and supported by the first holder assembly 346 in the first thickness direction (+Z1 direction). According to an embodiment, when the first distal reinforcement portion 3522 is disposed on the first housing 311, the hinge module 330, and/or the hinge cover 332, the first distal reinforcement portion 3522 may be supported in the first thickness direction (+Z1 direction) by the first housing 311, the hinge module 330, and/or the hinge cover 332. Accordingly, bending deformation of the first hinge plate 350 due to external pressure in the portion where the first distal reinforcement portion 3522 is disposed may be prevented.

According to an embodiment, the first distal reinforcement portion 3522 may include a bending structure BS. However, without limitations thereto, the first distal reinforcement portion 3522 may include at least one of the hemming structure HS, the first composite structure illustrated in FIG. 10 (e.g., the first composite structure CS1 of FIG. 10), the second composite structure illustrated in FIG. 11 (e.g., the second composite structure CS2 of FIG. 11), or the third composite structure illustrated in FIG. 12 (e.g., the third composite structure CS3 of FIG. 12).

According to an embodiment, the first reinforcement portion 352 may include a first proximal reinforcement portion 3523. The first proximal reinforcement portion 3523 may be disposed on the edge (e.g., the edge facing the third lateral direction (+Y1 direction) facing the folding axis F of the first body portion 351. The first proximal reinforcement portion 3523 may structurally reinforce the edge (e.g., the edge facing the third lateral direction (+Y1 direction)) facing the folding axis F of the first hinge plate 350. The first proximal reinforcement portion 3523 may be referred to as a 'proximal reinforcement portion.'

According to an embodiment, the first proximal reinforcement portion 3523 may be supported in the first thickness direction (+Z1 direction) by another member disposed on the side in the second thickness direction (-Z1 direction) of the first proximal reinforcement portion 3523. For example, the first proximal reinforcement portion 3523 may be supported by the hinge module 330 in the first thickness direction (+Z1 direction). Accordingly, bending deformation of the first hinge plate 350 due to external pressure in the portion where the first proximal reinforcement portion 3523 is disposed may be prevented. That is, the first proximal reinforcement portion 3523 may prevent or reduce bending deformation of the first hinge plate when external pressure is applied to the portion of the hinge plate where the first proximal portion is disposed.

According to an embodiment, the first proximal reinforcement portion 3523 may include a hemming structure HS. However, without limitations thereto, the first proximal reinforcement portion 3523 may include at least one of the bending structure BS, the first composite structure illustrated in FIG. 10 (e.g., the first composite structure CS1 of FIG. 10), the second composite structure illustrated in FIG. 11 (e.g., the second composite structure CS2 of FIG. 11), or the third composite structure illustrated in FIG. 12 (e.g., the third composite structure CS3 of FIG. 12).

According to an embodiment, the first proximal reinforcement portion 3523 may not overlap the flexible circuit board 340 in the thickness direction (e.g., the first thickness direction (+Z1 direction) and/or the second thickness direction (-Z1 direction) of the first housing 311. For example, referring to FIG. 5, the first proximal reinforcement portion 3523 may be disposed in an area where the flexible circuit board 340 does not pass. When the foldable electronic device 301 is deformed into the folded state (e.g., the state of FIG. 3), the edge facing the folding axis F of the first hinge plate 350, of the flexible circuit board 340, may contact the flexible circuit board 340 so that the first proximal reinforcement portion 3523 is disposed at a position not overlapping the flexible circuit board 340 in the thickness direction (e.g., the first thickness direction (+Z1 direction) and/or the second thickness direction (-Z1 direction)) of the first housing 311, preventing damage to the flexible circuit board 340 by the first proximal reinforcement portion 3523.

According to an embodiment, the hinge plate assembly HPA may include a second hinge plate 360 (e.g., the second hinge plate 292 of FIG. 4). The second hinge plate 360 may be disposed on the side of the second housing 312. The second hinge plate 360 may be disposed at a position adjacent to the folding axis F. The second hinge plate 360 may be disposed between the second housing 312 and the flexible display 320. For example, the second hinge plate 360 may be disposed on the side in the third thickness direction (+Z2 direction) of the second housing 312. The second hinge plate 360 may be fixed to a surface facing the third thickness direction (+Z2 direction) of the second housing 312. For example, the second hinge plate 360 may be fixed to the hinge module 330 and/or the second supporting member 3121. The second hinge plate 360 may cover at least a portion of the hinge module 330. The second hinge plate 360 may be referred to as a 'hinge plate.'

According to an embodiment, the second hinge plate 360 may support the flexible display 320. For example, the second hinge plate 360 may support the flexible display 320 in the third thickness direction (+Z2 direction). For example, the second hinge plate 360 may support a folding area (e.g., the folding area 231c of FIG. 2) of the flexible display 320 and/or an area adjacent thereto.

According to an embodiment, referring to FIGS. 5, 7, and 8, the second hinge plate 360 may include a second body portion 361. The second body portion 361 may have a plate shape. The second body portion 361 may be a portion in direct contact with the flexible display 320. The second body portion 361 may have a flat plate shape, or may include a part that is bent or bent in part, as illustrated in FIG. 8. The second body portion 361 may be referred to as a 'body portion.'

According to an embodiment, the second hinge plate 360 may include a second reinforcement portion 362. The second reinforcement portion 362 may be disposed in at least a partial area of the second body portion 361. The second reinforcement portion 362 may be formed by bending a portion of the second hinge plate 360 in the fourth thickness direction (-Z2 direction). The second reinforcement portion 362 may include a part protruding in a direction (e.g., the fourth thickness direction (-Z2 direction) perpendicular to the second body portion 361. According to an embodiment, the second reinforcement portion 362 may be provided separately from the second body portion 361 and fixed to the second body portion 361. For example, the second reinforcement portion 362 may be provided in a plate shape extending in a direction parallel to the second body portion 361, and may overlap and be fixed to the second body portion 361. For example, the second reinforcement portion 362 may be provided in a plate shape extending in a direction (e.g., the third thickness direction (+Z2 direction) and/or the fourth thickness direction (-Z2 direction) perpendicular to the second body portion 361, and may be fixed to the second body portion 361. According to an embodiment, a thickness of a portion of the second hinge plate 360 where the second reinforcement portion 362 is disposed may be larger than a thickness of a portion of the second hinge plate 360 where the second reinforcement portion 362 is not disposed. The second reinforcement portion 362 may be referred to as a 'reinforcement portion.'

According to an embodiment, the second reinforcement portion 362 may reinforce the structural rigidity of the second hinge plate 360 to alleviate the deformation of the second body portion 361 from the external pressure applied to the second body portion 361. Specifically, an empty space may be formed between the second hinge plate 360 and the hinge module 330 disposed under the second hinge plate 360 (e.g., the side in the fourth thickness direction (-Z2 direction) of the second hinge plate 360), the flexible circuit board 340, and/or the second supporting member 3121. When an external pressure or external impact is applied to the second hinge plate 360, the second hinge plate 360 may be bent or pressed to cause deformation of the second hinge plate 360. Deformation of the second hinge plate 360 may cause deformation of the flexible display 320 supported by the second hinge plate 360. If the deformation of the flexible display 320 increases, effects such as cracks or leakage current may occur in the flexible display 320, resulting in bit loss, or breakage of the vacuum state of the thin film encapsulation. According to an embodiment, the second reinforcement portion 362 may structurally reinforce the second hinge plate 360 to reduce bending deformation of the second hinge plate 360, and further prevent damage to the flexible display 320 due to bending deformation of the second hinge plate 360.

According to an embodiment, the second reinforcement portion 362 may configured to be supported in the third thickness direction (+Z2 direction) in response to the external pressure applied to the second hinge plate 360 by at least one of the internal structure of the second housing 312 disposed near the second enhancement portion 362, the hinge module 330, or the hinge cover 332 to alleviate deformation of the second hinge plate 360 by the external pressure. For example, the second reinforcement portion 362 may be supported in the third thickness direction (+Z2 direction) by at least one of the second supporting member 3121, the second holder assembly 347, the hinge module 330, or the hinge cover 332 of the second housing 312. For example, the internal structure of the second housing 312 described above may be at least one of the second supporting member 3121 configured to support the flexible display 320 and the hinge module 330 positioned on the side of the second housing 312 or the second holder assembly 347 configured to fix the flexible circuit board 340 to the second supporting member 3121. Depending on the position where the second reinforcement portion 362 is formed, the component supporting the second reinforcement portion 362 may differ. As the second reinforcement portion 362 is supported in the third thickness direction (+Z2 direction), it is possible to prevent the second hinge plate 360 from being bent in the fourth thickness direction (-Z2 direction) by external pressure applied to the second hinge plate 360.

According to an embodiment, the second reinforcement portion 362 may be formed on at least a portion of an edge of the second hinge plate 360. For example, the second reinforcement portion 362 may be disposed on an edge facing the second lateral direction (-X direction) of the second body portion 361, an edge facing the first lateral direction (+X direction), and/or an edge facing the direction (e.g., the sixth lateral direction (-Y2 direction)) away from the folding axis F. However, without limitations thereto, the second reinforcement portion 362 may be additionally or alternatively disposed in the central area of the second body portion 361 and/or the edge facing the folding axis F (e.g., the edge facing the fifth lateral direction (+Y2 direction)).

According to an embodiment, the second reinforcement portion 362 may include a second perpendicular side reinforcement portion 3621. The first perpendicular side reinforcement portion 3521 may be disposed on at least one of two opposite edges of the second hinge plate 360. For example, the second perpendicular side reinforcement portion 3621 may be disposed on an edge perpendicular to the folding axis F among the edges of the second hinge plate 360. For example, the second perpendicular side reinforcement portion 3621 may be disposed on each of the edges of the second body portion 361 facing the first lateral direction (+X direction) and the second lateral direction (-X direction). The second perpendicular side reinforcement portion 3621 may structurally reinforce two opposite edges of the second hinge plate 360. The second perpendicular side reinforcement portion 3621 may be referred to as a 'perpendicular side reinforcement portion.'

According to an embodiment, the second perpendicular side reinforcement portion 3621 may be supported in the third thickness direction (+Z2 direction) by another member disposed on the side in the fourth thickness direction (-Z2 direction) of the second perpendicular side reinforcement portion 3621. For example, the second perpendicular side reinforcement portion 3621 may be supported by the hinge module 330 and/or the hinge cover 332 in the third thickness direction (+Z2 direction). Referring to FIG. 6, a portion of the second perpendicular side reinforcement portion 3621 may be disposed on the hinge cover 332, and another portion of the second perpendicular side reinforcement portion 3621 may be disposed on the hinge module 330. When an external pressure is applied to the portion where the second perpendicular side reinforcement portion 3621 is disposed, the second perpendicular side reinforcement portion 3621 may be supported by the hinge module 330 and/or the hinge cover 332 in the third thickness direction (+Z2 direction). According to an embodiment, when the second perpendicular side reinforcement portion 3621 is disposed on the second housing 312, the second perpendicular side reinforcement portion 3621 may be supported by the second housing 312 in the third thickness direction (+Z2 direction). Accordingly, bending deformation of the second hinge plate 360 due to external pressure may be prevented in the portion where the second perpendicular side reinforcement portion 3621 is disposed.

According to an embodiment, the second perpendicular side reinforcement portion 3621 may include a hemming structure HS. However, without limitations thereto, the second reinforcement portion 362 may include at least one of the bending structure BS, the first composite structure illustrated in FIG. 10 (e.g., the first composite structure CS1 of FIG. 10), the second composite structure illustrated in FIG. 11 (e.g., the second composite structure CS2 of FIG. 11), or the third composite structure illustrated in FIG. 12 (e.g., the third composite structure CS3 of FIG. 12).

According to an embodiment, the second perpendicular side reinforcement portion 3621 may be disposed adjacent to the folding axis F. For example, the second perpendicular side reinforcement portion 3621 may extend in a direction (e.g., the sixth lateral direction (-Y2 direction)) away from the folding axis F, from an end portion facing the folding axis F of each of the edges facing the first lateral direction (+X direction) and the second lateral direction (-X direction) of the second body portion 361 (e.g., an end portion facing the fifth lateral direction (+Y2 direction)). For example, the second perpendicular side reinforcement 3621 may be understood as being disposed in the upper left and upper right areas of the second body portion 361 with respect to FIG. 5. Accordingly, the structural rigidity of a portion adjacent to the folding axis F of the end portion areas on two opposite sides of the second hinge plate 360, which is highly likely to be deformed by external impact and/or external pressure, of the second hinge plate 360 may be reinforced.

According to an embodiment, the second reinforcement portion 362 may include a second horizontal side reinforcement portion 3622; 3623. The second horizontal side reinforcement portion 3622; 3623 may be disposed on at least a portion of an edge which is parallel to the folding axis F among the edges of the second hinge plate 360. For example, the second horizontal side reinforcement portion 3622 may be disposed on at least a portion of the edge facing the direction (e.g., the sixth lateral direction (-Y2 direction)) away from the folding axis F of the second hinge plate 360, and the second horizontal side reinforcement portion 3623 may be disposed on at least a portion of the edge (e.g., the edge facing the fifth lateral direction (+Y2 direction)) facing the folding axis F of the second hinge plate 360.

According to an embodiment, a portion of the second horizontal side reinforcement portion 3622; 3623 may be supported by at least one of the hinge module 330, the second holder assembly 347, and the second supporting member 3121 of the second housing 312. For example, the second horizontal side reinforcement portion 3622 disposed on an edge facing the direction (e.g., the sixth lateral direction (-Y2 direction)) away from the folding axis F of the second hinge plate 360 may be supported in the third thickness direction (+Z2 direction) by the second holder assembly 347 and/or the second supporting member 3121. For example, the second horizontal side reinforcement portion 3622 disposed on the edge facing the folding axis F of the second hinge plate 360 (e.g., the edge facing the fifth lateral direction (+Y2 direction)) may be supported by the hinge module 330 in the third thickness direction (+Z2 direction).

According to an embodiment, the second horizontal side reinforcement portion 3622; 3623 may include a second distal reinforcement portion 3622 and a second proximal reinforcement portion 3623. For example, the second horizontal side reinforcement 3622 disposed on the edge facing the direction (e.g., the sixth lateral direction (-Y2 direction)) away from the folding axis F of the second hinge plate 360 may be referred to as the second distal reinforcement portion 3622. For example, the second horizontal side reinforcement portion 3623 disposed on the edge (e.g., the edge facing the fifth lateral direction (+Y2 direction)) facing the folding axis F of the second hinge plate 360 may be referred to as a second proximal reinforcement portion 3623.

According to an embodiment, the second distal reinforcement portion 3622 may be disposed on the edge facing the direction (e.g., the sixth lateral direction (-Y2 direction)) away from the folding axis F of the second body portion 361. The second distal reinforcement portion 3622 may structurally reinforce the edge facing the direction away from the folding axis F of the second hinge plate 360. The second distal reinforcement portion 3622 may be referred to as a 'distal reinforcement portion.'

According to an embodiment, the second distal reinforcement portion 3622 may be supported in the third thickness direction (+Z2 direction) by another member disposed in the fourth thickness direction (-Z2 direction) of the second distal reinforcement portion 3622. For example, the second distal reinforcement portion 3622 may be supported by the second holder assembly 347 in the third thickness direction (+Z2 direction). Referring to FIG. 8, the second distal reinforcement portion 3622 may be disposed on the second holder assembly 347 and supported by the second holder assembly 347 in the third thickness direction (+Z2 direction). According to an embodiment, when the second distal reinforcement portion 3622 is disposed on the second housing 312, the hinge module 330, and/or the hinge cover 332, the second distal reinforcement portion 3622 may be supported in the third thickness direction (+Z2 direction) by the second housing 312, the hinge module 330, and/or the hinge cover 332. Accordingly, bending deformation of the second hinge plate 360 due to external pressure in the portion where the second distal reinforcement portion 3622 is disposed may be prevented, reduced or minimised.

According to an embodiment, the second distal reinforcement portion 3622 may include a bending structure BS. However, without limitations thereto, the second distal reinforcement portion 3622 may include at least one of the hemming structure HS, the first composite structure illustrated in FIG. 10 (e.g., the first composite structure CS1 of FIG. 10), the second composite structure illustrated in FIG. 11 (e.g., the second composite structure CS2 of FIG. 11), or the third composite structure illustrated in FIG. 12 (e.g., the third composite structure CS3 of FIG. 12).

According to an embodiment, the second reinforcement portion 362 may include a second proximal reinforcement portion 3623. The second proximal reinforcement portion 3623 may be disposed on the edge (e.g., the edge facing the fifth lateral direction (+Y2 direction)) facing the folding axis F of the second body portion 361. The second proximal reinforcement portion 3623 may structurally reinforce the edge (e.g., the edge facing the fifth lateral direction (+Y2 direction)) facing the folding axis F of the second hinge plate 360. The second proximal reinforcement portion 3623 may be referred to as a 'proximal reinforcement portion.'

According to an embodiment, the second proximal reinforcement portion 3623 may be supported in the third thickness direction (+Z2 direction) by another member disposed on the side in the fourth thickness direction (-Z2 direction) of the second proximal reinforcement portion 3623. For example, the second proximal reinforcement portion 3623 may be supported by the hinge module 330 in the third thickness direction (+Z2 direction). Accordingly, bending deformation of the second hinge plate 360 due to external pressure in the portion where the second proximal reinforcement portion 3623 is disposed may be prevented.

According to an embodiment, the second proximal reinforcement portion 3623 may include a hemming structure HS. However, without limitations thereto, the second proximal reinforcement portion 3623 may include at least one of the bending structure BS, the first composite structure illustrated in FIG. 10 (e.g., the first composite structure CS1 of FIG. 10), the second composite structure illustrated in FIG. 11 (e.g., the second composite structure CS2 of FIG. 11), or the third composite structure illustrated in FIG. 12 (e.g., the third composite structure CS3 of FIG. 12).

According to an embodiment, the second proximal reinforcement portion 3623 may not overlap flexible circuit board 340 in the thickness direction (e.g., the third thickness direction (+Z2 direction) and/or the fourth thickness direction (-Z2 direction)) of the second housing 312. For example, referring to FIG. 5, the second proximal reinforcement portion 3623 may be disposed in an area where the flexible circuit board 340 does not pass. When the foldable electronic device 301 is deformed into the folded state (e.g., the state of FIG. 3), the edge facing the folding axis F of the second hinge plate 360, of the flexible circuit board 340, may contact the flexible circuit board 340 so that the second proximal reinforcement portion 3623 is disposed at a position not overlapping the flexible circuit board 340 in the thickness direction (e.g., the third thickness direction (+Z2 direction) and/or the fourth thickness direction (-Z2 direction)) of the second housing 312, preventing damage to the flexible circuit board 340 by the second proximal reinforcement portion 3623.

According to an embodiment, the distance d1 between the area facing the first lateral direction (+X direction) of the first hinge plate 350 and the area facing the first lateral direction (+X direction) of the second hinge plate 360 may be smaller than the distance d3 between the central area of the first hinge plate 350 and the central area of the second hinge plate 360. According to an embodiment, the distance d2 between the area facing the second lateral direction (-X direction) of the first hinge plate 350 and the area facing the second lateral direction (-X direction) of the second hinge plate 360 may be smaller than the distance d3 between the central area of the first hinge plate 350 and the central area of the second hinge plate 360. For example, with respect to FIG. 5, the distance d1, d2 between the first hinge plate 350 and the second hinge plate 360 in the area (e.g., a non-overlapping area) where the first hinge plate 350 and the second hinge plate 360 do not overlap the center bar 331 of the hinge module 330 in the lateral direction (e.g., the third lateral direction to the sixth lateral direction (-Y2 direction)) may be smaller than the distance d3 between the first hinge plate 350 and the second hinge plate 360 in the area where the first hinge plate 350 and the second hinge plate 360 overlap the center bar 331 of the hinge module 330 in the lateral direction (e.g., the third lateral direction (+Y1 direction) to the sixth lateral direction (-Y2 direction)). For example, a portion of the first hinge plate 350 and the second hinge plate 360 that does not overlap the center bar 331 in the lateral direction (e.g., the third lateral direction (+Y1 direction), the fourth lateral direction (-Y1 direction), the fifth lateral direction (+Y2 direction), and/or the sixth lateral direction (-Y2 direction)) perpendicular to the folding axis F may protrude toward the folding axis F with respect to the center bar 331. Accordingly, since it is possible to maximally secure the area of the hinge plate 350, 360 where the flexible display 320 may be supported in two opposite side areas of the first hinge plate 350 and the second hinge plate 360 where an empty space is formed between the flexible display 320 and the hinge module 330, damage to the flexible display 320 occurring due to lack of the hinge plate 350, 360 in two opposite side areas of the hinge plate 350, 360 may be reduced.

According to an embodiment, the edge facing the first lateral direction (+X direction) of the first hinge plate 350 and the edge facing the first lateral direction (+X direction) of the second hinge plate 360 may be adjacent to each other. According to an embodiment, the edge facing the second lateral direction (-X direction) of the first hinge plate 350 and the edge facing the second lateral direction (-X direction) of the second hinge plate 360 may be adjacent to each other. Accordingly, since the edge of the folding area (e.g., the folding area 231c of FIG. 2) of the flexible display 320, which is one of the portions with the highest risk of damage, may be supported by the hinge plates 350 and 360, it is possible to reduce damage to the flexible display 320.

According to an embodiment, the first perpendicular side reinforcement portion 3521 and the second perpendicular side reinforcement portion 3621 may be adjacent to each other. For example, referring to FIG. 7, the first perpendicular side reinforcement portion 3521 and the second reinforcement portion 362 may be adjacent to each other through a structure in which the first perpendicular side reinforcement portion 3521 is disposed adjacent to the folding axis F at each of the edges facing the first lateral direction (+X direction) and the second lateral direction (-X direction) of the first body portion 351, and the edges facing the first lateral direction (+X direction) and the second lateral direction (-X direction) of the first hinge plate 350 and the edges facing the first lateral direction (+X direction) and the second lateral direction (-X direction) of the second hinge plate 360, respectively, are adjacent to each other. Thus, it is possible to reinforce the structural rigidity of the portion adjacent to the folding axis F of the two opposite edges of the hinge plates 350 and 360 where most bending deformation may occur due to external pressure and/or external impact and to reduce damage to the flexible display 320 in the corresponding areas.

According to an embodiment, at least a portion of the first reinforcement portion 352 and/or at least a portion of the second reinforcement portion 362 may include a hemming structure HS. For example, the first perpendicular side reinforcement portion 3521 and/or the second perpendicular side reinforcement portion 3621 may include a hemming structure HS. For example, the first proximal reinforcement portion 3523 and/or the second proximal reinforcement portion 3623 may include a hemming structure HS. For example, referring to FIG. 6, the hemming structure HS may be formed by hemming a portion of the edge of the first body portion 351 and/or the second body portion 361 toward the hinge module 330.

According to an embodiment, since the hemming structure HS is composed of two layers of plates (by virtue of the plate being folded back on itself to form two layers), the structural rigidity of the first hinge plate 350 and/or the second hinge plate 360 may be reinforced in the portion where the hemming structure HS is formed, thereby reducing deformation of the first hinge plate 350 and/or the second hinge plate 360 due to external pressure and/or external impact. Accordingly, damage to the flexible display 320 supported by the first hinge plate 350 and/or the second hinge plate 360 may be prevented.

According to an embodiment, the hemming structure HS may include a portion HS1 that is hemmed at a portion of an edge of the first body portion 351 and extends internally. For example, the hemming structure HS may include a portion HS1 that is hemmed in the second thickness direction (-Z1 direction) at a portion of the edge of the first body portion 351 and extends internally. According to an embodiment, the hemming structure HS may include a portion HS1 that is folded on a portion of an edge of the second body portion 361 and extends inward. For example, the hemming structure HS may include a portion HS1 that is hemmed in the fourth thickness direction (-Z2 direction) at a portion of the edge of the second body portion 361 and extends internally. For example, the portion HS1 may overlap at least a portion of the first body portion 351 in the first thickness direction (+Z1 direction) and/or the second thickness direction (-Z1 direction). For example, it may be understood that the portion HS1 is the first reinforcement portion 352 and/or the second reinforcement portion 362.

When an external impact was artificially applied to two opposite edges of the folding area (e.g., the folding area 231c of FIG. 2), according to an experimental example for identifying whether the flexible display 320 is damaged according to the magnitude of the external impact, damage to the flexible display 320 was identified when an external impact of 4.5 kgf was applied when the hemming structure HS was not applied to the perpendicular side reinforcement portions 3521 and 3621. On the other hand, when the hemming structure HS was applied to the perpendicular side reinforcement portions 3521 and 3621, damage to the flexible display 320 was identified when an external impact of 7.0 kgf was applied. As described above, when the hemming structure HS is applied to the edges of the perpendicular side reinforcement portions 3521 and 3621, it may be identified that the durability of the flexible display 320 is enhanced. Advantageously, the hemming structure enhances the durability and strength of the flexible display to reduce damage caused to the display when an external pressure is applied.

According to an embodiment, at least a portion of the first reinforcement portion 352 and/or at least a portion of the second reinforcement portion 362 may include a bending structure BS. For example, the first distal reinforcement portion 3522 and/or the second distal reinforcement portion 3622 may include a bending structure BS. For example, the bending structure BS may be formed by bending a portion of the edge of the first body portion 351 and/or a portion of the edge of the second body 361 toward the hinge module 330. The bending structure BS includes a plate extending in the thickness direction of the first housing 311 (e.g., the first thickness direction (+Z1 direction) and/or the second thickness direction (-Z1)) and/or the thickness direction of the second housing 312 (e.g., third thickness direction (+Z2 direction) and/or fourth thickness direction (-Z2 direction)), and thus may include a portion thicker than the first body portion 351 and/or the second body portion 361. Accordingly, the structural rigidity of the first hinge plate 350 and/or the second hinge plate 360 may be reinforced in the portion where the bending structure BS is formed. The bending structure BS may be referred to as an L-bending structure.

According to an embodiment, the bending structure BS may include a portion BS1 that is bent at a portion of an edge of the first body portion 351 and extends in one direction perpendicular to the first body portion 351. For example, the bending structure BS may include a portion BS1 that is bent at a portion of an edge of the first body portion 351 in the second thickness direction (-Z1 direction) and extends in the second thickness direction (-Z1 direction). According to an embodiment, the bending structure BS may include a portion BS1 that is bent at a portion of an edge of the second body 361 and extends in one direction perpendicular to the second body 361. For example, the bending structure BS may include a portion BS1 that is bent at a portion of an edge of the second body portion 361 in the fourth thickness direction (-Z2 direction) and extends in the fourth thickness direction (-Z2 direction). For example, it may be understood that the portion BS1 is the first reinforcement portion 352 and/or the second reinforcement portion 362.

Unlike the foregoing, the first reinforcement portion 352 may be formed in various structures according to the structure of the first supporting member 3111 and/or the hinge module 330 disposed under the first hinge plate 350 (e.g., the side in the second thickness direction (-Z1 direction) of the first hinge plate 350) and the structure of the space formed under the first hinge plate 350 (e.g., the side in the second thickness direction (-Z1 direction) of the first hinge plate 350). Furthermore, the second reinforcement portion 362 may be formed in various structures according to the structure of the second supporting member 3121 and/or hinge module 330 disposed under the second hinge plate 360 (e.g., the side in the fourth thickness direction (-Z2 direction) of the second hinge plate 360) and the structure of the space formed under the second hinge plate 360 (e.g., the side in the fourth thickness direction (-Y1 direction) of the second hinge plate 360). For example, the first perpendicular side reinforcement portion 3521 and/or the second perpendicular side reinforcement portion 3621 may include a bending structure BS, and the first distal reinforcement portion 3522 and/or the second distal reinforcement portion 3622 may include a hemming structure HS. For example, the first reinforcement portion 352 (e.g., the first perpendicular side reinforcement portion 3521, the first distal reinforcement portion 3522, and the first proximal reinforcement portion 3523) and/or the second reinforcement portion 362 (e.g., the second perpendicular side reinforcement portion 3621, the second distal reinforcement portion 3622, and the second proximal reinforcement portion 3623) may include a hemming structure HS. For example, the first reinforcement portion 352 (e.g., the first perpendicular side reinforcement portion 3521, the first distal reinforcement portion 3522, and the first proximal reinforcement portion 3523) and/or the second reinforcement portion 362 (e.g., the second perpendicular side reinforcement portion 3621, the second distal reinforcement portion 3622, and the second proximal reinforcement portion 3623) may include a bending structure BS.

FIG. 10 is an enlarged plan view illustrating a partial configuration of a foldable electronic device according to an embodiment of the disclosure. FIG. 11 is an enlarged cross-sectional view illustrating a partial configuration of a foldable electronic device according to an embodiment of the disclosure. FIG. 12 is an enlarged cross-sectional view illustrating a partial configuration of a foldable electronic device according to an embodiment of the disclosure.

FIGS. 10 to 12 illustrate various examples of the first reinforcement portion 352 illustrated in FIG. 5, and simultaneously illustrate a cross-sectional view taken along line A-A' of FIG. 5 and a cross-sectional view taken along line B-B' of FIG. 5.

The first reinforcement portion 352 illustrated in FIGS. 5 to 9 may additionally and/or alternatively include at least a portion of the structure of the first reinforcement portion 452 illustrated in FIG. 10, at least a portion of the structure of the first reinforcement portion 552 illustrated in FIG. 11, and/or at least a portion of the structure of the first reinforcement portion 652 illustrated in FIG. 12. The second reinforcement portion 362 illustrated in FIGS. 5 to 9 may additionally and/or alternatively include at least a portion of the structure of the second reinforcement portion 462 illustrated in FIG. 10, at least a portion of the structure of the second reinforcement portion 562 illustrated in FIG. 11, and/or at least a portion of the structure of the second reinforcement portion 662 illustrated in FIG. 12.

The detailed configuration of the foldable electronic devices 401, 501, and 601 according to an embodiment of the disclosure not described below may be identical or similar to the detailed configuration of the foldable electronic device according to an embodiment of the disclosure described with reference to FIGS. 1 to 4 and/or the detailed configuration of the foldable electronic device 301 according to an embodiment of the disclosure described with reference to FIGS. 5 to 9.

According to an embodiment, referring to FIG. 10, at least a portion of the first reinforcement portion 452 and/or at least a portion of the second reinforcement portion 462 may include a first composite structure CS1. The first composite structure CS1 may be formed by bending two layers of plates formed by hemming a portion of the edge of the first body portion 451 and/or a portion of the edge of the second body portion 461 toward the hinge module 430. For example, the first composite structure CS1 may be a structure where two layers of plates are bent in the second thickness direction (-Z1 direction) or the fourth thickness direction (-Z2 direction). The first composite structure CS1 is a combination of the hemming structure (e.g., the hemming structure HS of FIGS. 6 and 7) and the bending structure (e.g., the bending structure BS of FIGS. 8 and 9) described in connection with FIGS. 5 to 9, and the structural rigidity of the portion where the first composite structure CS1 is disposed in the first hinge plate 450 and/or the second hinge plate 460 may be more strongly reinforced through the multi-bent structure of the first composite structure CS1.

According to an embodiment, the first composite structure CS1 may include a first portion CS1-1 that is bent at a portion of an edge of the first body portion 451 and extends in one direction perpendicular to the first body portion 451, a second portion CS1-2 that is hemmed inwardly from an end portion of the first portion CS1-1 and extends in the other direction opposite to the one direction, and a third portion CS1-3 that is bent inwardly from an end portion of the second portion CS1-2 and extends inwardly. For example, the first composite structure CS1 may include a first portion CS1-1 that is bent in the second thickness direction (-Z1 direction) at a portion of an edge of the first body portion 451 and extends in the second thickness direction (-Z1 direction), a second portion CS1-2 that is hemmed inwardly from an end portion of the first portion CS1-1 and extends in the first thickness direction (+Z1 direction), and a third portion CS1-3 that is bent inwardly from an end portion of the second portion CS1-2 and extends inwardly. According to an embodiment, the first composite structure CS1 may include a first portion CS1-1 that is bent at a portion of an edge of the second body portion 461 and extends in one direction perpendicular to the second body portion 461, a second portion CS1-2 that is hemmed inwardly from an end portion of the first portion CS1-1 and extends in the other direction opposite to the one direction, and a third portion CS1-3 that is bent inwardly from an end portion of the second portion CS1-2 and extends inwardly. For example, the first composite structure CS1 may include a first portion CS1-1 that is bent in the fourth thickness direction (-Z2 direction) at a portion of an edge of the second body portion 461 and extends in the fourth thickness direction (-Z2 direction), a second portion CS1-2 that is hemmed inwardly from an end portion of the first portion CS1-1 and extends in the third thickness direction (+Z2 direction), and a third portion CS1-3 that is bent inwardly from an end portion of the second portion CS1-2 and extends inwardly.

According to an embodiment, at least one of the first perpendicular side reinforcement portion 4521, the first distal reinforcement portion 3522 (e.g., the first distal reinforcement portion 3522 of FIG. 8), the first proximal reinforcement portion (e.g., the first proximal reinforcement portion 3523 of FIG. 8), the second perpendicular side reinforcement portion 4621, the second distal reinforcement portion (e.g., the second distal reinforcement portion 3622 of FIG. 8), or the second proximal reinforcement portion (e.g., the second proximal reinforcement portion 3623 of FIG. 8) may include the first composite structure CS1. For example, as illustrated in FIG. 10, the first perpendicular side reinforcement portion 4521 and/or the second perpendicular side reinforcement portion 4621 may include the first composite structure CS1.

According to an embodiment, referring to FIG. 11, at least a portion of the first reinforcement portion 552 and/or the second reinforcement portion 562 may include the second composite structure CS2. The second composite structure CS2 may include a U-shaped structure where a portion of the edge of the first body portion 551 and/or a portion of the edge of the second body portion 561 are bent in a U-shape toward the hinge module 530, and a bending structure bent outward from an end portion of the U-shaped structure to extend. Through the multi-bent structure of the second composite structure CS2, the structural rigidity of a portion of the first hinge plate 550 where the second composite structure CS2 is disposed may be more strongly reinforced.

According to an embodiment, the second composite structure CS2 may include a first portion CS2-1 that is bent at a portion of an edge of the first body portion 551 and extends in one direction perpendicular to the first body portion 551, a second portion CS2-2 that is hemmed outwardly from an end portion of the first portion CS1-2 and extends in the other direction opposite to the one direction, and a third portion CS2-3 that is bent outwardly from an end portion of the second portion CS2-2 and extends outwardly. For example, the second composite structure CS2 may include a first portion CS2-1 that is bent in the second thickness direction (-Z1 direction) at a portion of an edge of the first body portion 551 and extends in the second thickness direction (-Z1 direction), a second portion CS2-2 that is hemmed outwardly from an end portion of the first portion CS2-1 and extends in the first thickness direction (+Z1 direction), and a third portion CS2-3 that is bent outwardly from an end portion of the second portion CS2-2 and extends outwardly. According to an embodiment, the second composite structure CS2 may include a first portion CS2-1 that is bent at a portion of an edge of the second body portion 561 and extends in one direction perpendicular to the second body portion 561, a second portion CS2-2 that is hemmed outwardly from an end portion of the first portion CS1-2 and extends in the other direction opposite to the one direction, and a third portion CS2-3 that is bent outwardly from an end portion of the second portion CS2-2 and extends outwardly. For example, the second composite structure CS2 may include a first portion CS2-1 that is bent in the fourth thickness direction (-Z2 direction) at a portion of an edge of the second body portion 561 and extends in the fourth thickness direction (-Z2 direction), a second portion CS2-2 that is hemmed outwardly from an end portion of the first portion CS2-1 and extends in the third thickness direction (+Z2 direction), and a third portion CS2-3 that is bent outwardly from an end portion of the second portion CS2-2 and extends outwardly.

According to an embodiment, the third portion CS2-3 may be supported by the hinge cover 532. For example, the third portion CS2-3 may be seated on an end portion facing the first thickness direction (+Z1 direction) and/or the third thickness direction (+Z2 direction) of a portion of the hinge cover 532, and may be supported by the hinge cover 532 in the first thickness direction (+Z1 direction) and/or the third thickness direction (+Z2 direction). As such, since the structural rigidity may be enhanced by securing a sufficient thickness through the first portion CS2-1 and the second portion CS2-2 of the second composite structure CS2 while the third portion CS2-3 may be supported by the hinge cover 532 in the first thickness direction (+Z1 direction) and/or the third thickness direction (+Z2 direction), it is possible to effectively prevent bending deformation of the portion where the second composite structure CS2 is disposed in the first hinge plate 550 and/or the second hinge plate 560.

According to an embodiment, at least one of the first perpendicular side reinforcement portion 5521, the first distal reinforcement portion 3522 (e.g., the first distal reinforcement portion 3522 of FIG. 8), the first proximal reinforcement portion (e.g., the first proximal reinforcement portion 3523 of FIG. 8), the second perpendicular side reinforcement portion 5621, the second distal reinforcement portion 3622 of FIG. 8), or the second proximal reinforcement portion (e.g., the second proximal reinforcement portion 3623 of FIG. 8) may include a second composite structure CS2. For example, as illustrated in FIG. 11, the first perpendicular side reinforcement portion 5521 and/or the second perpendicular side reinforcement portion 5621 may include a second composite structure CS2.

According to an embodiment, referring to FIG. 12, at least a portion of the first reinforcement portion 652 and/or at least a portion of the second reinforcement portion 462 may include a third composite structure CS3. The third composite structure CS3 may include a first hemming structure formed by hemming a portion of the edge of the first body portion 651 and/or a portion of the edge of the second body portion 661 toward the hinge module 630, and a second hemming structure formed by hemming once more toward the hinge module 630 at the end portion of the first hemming structure. The third composite structure CS3 is a structure in which the hemming structure (e.g., the hemming structure HS of FIGS. 6 and 7) described in connection with FIGS. 6 and 7 has been repeated, and through the multi-bent structure of the third composite structure CS3, the structural rigidity of the portion where the third composite structure CS3 is disposed in the first hinge plate 650 may be more strongly enhanced.

According to an embodiment, the third composite structure CS3 may include a first portion CS3-1 that is hemmed at a portion of the edge of the first body portion 651 and extends inwardly and a second portion CS3-2 that is hemmed at an end portion of the first portion CS3-1 and extends outwardly. For example, the third composite structure CS3 may include a first portion CS3-1 that is hemmed in the second thickness direction (-Z1 direction) at a portion of the edge of the first body portion 651 and a second portion CS3-2 that is hemmed in the second thickness direction (-Z1 direction) at the end portion of the first portion CS3-1 and extends outwardly. According to an embodiment, the third composite structure CS3 may include a first portion CS3-1 that is hemmed at a portion of the edge of the second body portion 661 and extends inwardly and a second portion CS3-2 that is hemmed at an end portion of the first portion CS3-1 and extends outwardly. For example, the third composite structure CS3 may include a first portion CS3-1 that is hemmed in the fourth thickness direction (-Z2 direction) at a portion of the edge of the second body portion 661 and a second portion CS3-2 that is hemmed in the fourth thickness direction (-Z2 direction) at the end portion of the first portion CS3-1 and extends outwardly.

Without limitations thereto, the second portion CS3-2 may be hemmed at an end portion of the first portion CS3-1 in the first thickness direction (+Z1 direction) and/or the third thickness direction (+Z2 direction) and extend outwardly. For example, the second portion CS3-2 may be understood as being disposed between the first body portion 651 and the first portion CS3-1. For example, the third composite structure CS3 may be understood as being formed by hemming a portion of the edge of the first body portion 651 and/or a portion of the edge of the second body portion 661 inwardly twice.

According to an embodiment, at least one of the first perpendicular side reinforcement portion 6521, the first distal reinforcement portion 3522 (e.g., the first distal reinforcement portion 3522 of FIG. 8), the first proximal reinforcement portion (e.g., the first proximal reinforcement portion 3523 of FIG. 8), the second perpendicular side reinforcement portion 6621, the second distal reinforcement portion (e.g., the second distal reinforcement portion 3622 of FIG. 8), or the second proximal reinforcement portion (e.g., the second proximal reinforcement portion 3623 of FIG. 8) may include a third composite structure CS3. For example, as illustrated in FIG. 12, the first perpendicular side reinforcement portion 6521 and/or the second perpendicular side reinforcement portion 6621 may include a third composite structure CS3.

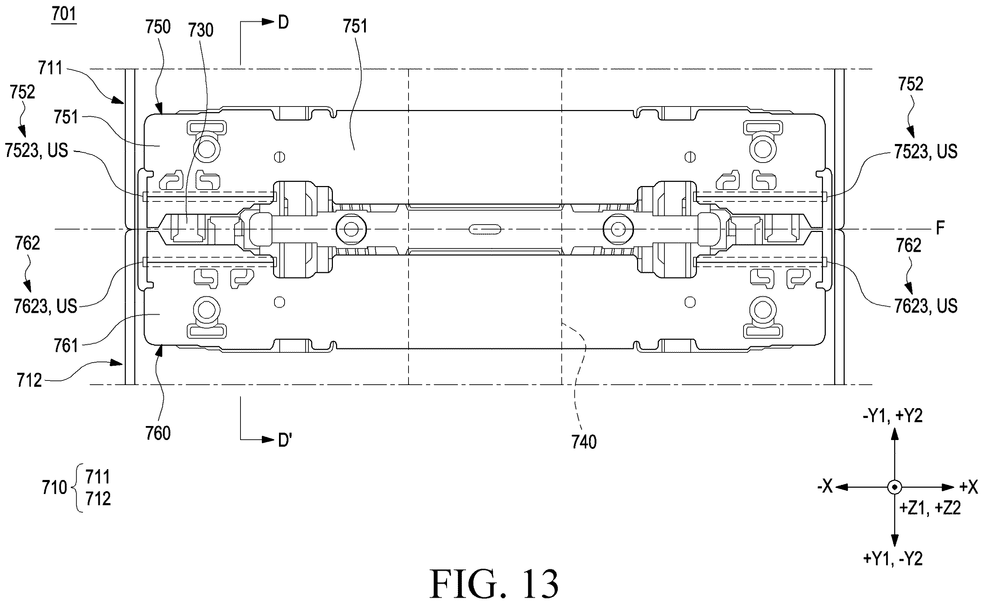

FIG. 13 is a plan view illustrating a partial configuration of a foldable electronic device according to an embodiment of the disclosure. FIG. 14 is a cross-sectional view illustrating a partial configuration of a foldable electronic device according to an embodiment of the disclosure, taken along line D-D' of FIG. 13.

Specifically, FIG. 13 is a plan view illustrating areas of the first hinge plate 750 and the second hinge plate 760 when the foldable electronic device 701 is in the unfolded state (e.g., the state of FIG. 2). FIG. 14 is a cross-sectional view illustrating the flexible display 720, the first hinge plate 750, and the second hinge plate 760.

The first reinforcement portion 352 illustrated in FIGS. 5 to 9, the first reinforcement portion 452 illustrated in FIG. 10, the first reinforcement portion 552 illustrated in FIG. 11, and/or the first reinforcement portion 652 illustrated in FIG. 12 may additionally and/or alternatively include at least a portion of the structure of the first reinforcement portion 752 illustrated in FIGS. 13 and 14. The second reinforcement portion 362 illustrated in FIGS. 5 to 9, the second reinforcement portion 462 illustrated in FIG. 10, the second reinforcement portion 562 illustrated in FIG. 11, and/or the second reinforcement portion 662 illustrated in FIG. 12 may additionally and/or alternatively include at least a portion of the structure of the second reinforcement portion 762 illustrated in FIGS. 13 and 14.

The detailed configuration of the foldable electronic device 701 according to an embodiment of the disclosure not described below may be identical or similar to the detailed configuration of the electronic device 101 according to an embodiment of the disclosure described with reference to FIGS. 1 to 4, the detailed configuration of the foldable electronic device 301 according to an embodiment of the disclosure described with reference to FIGS. 5 to 9, the detailed configuration of the foldable electronic device 401 according to an embodiment of the disclosure described with reference to FIG. 10, the detailed configuration of the foldable electronic device 501 according to an embodiment of the disclosure described with reference to FIG. 11, and/or the detailed configuration of the foldable electronic device 601 according to an embodiment of the disclosure described with reference to FIG. 12.

According to an embodiment, the first reinforcement portion 752 may include a first central reinforcement portion 7523. The first central reinforcement portion 7523 may be disposed across at least a portion of the first body portion 751. The first central reinforcement portion 7523 may reinforce structural rigidity of an intermediate area of the first hinge plate 750. An intermediate area may be an area that is not at an edge of the hinge plate. An intermediate area may be an area that is substantially central.

The first central reinforcement portion 7523 may include a U-shaped structure US. The U-shaped structure US may be formed by bending a portion of the first body portion 751 in a U shape toward the hinge module 730. The U-shaped structure US may include a first portion US1 that is bent at a portion of the first body portion 751 and extends in one direction perpendicular to the first body portion 751 and a second portion US2 that is hemmed at an end portion of the first portion US1 and extends in the other direction opposite to the one direction. For example, the U-shaped structure US may include a first portion US1 that is bent in the second thickness direction (-Z1 direction) at a portion of the first body portion 751 and extends in the second thickness direction (-Z1 direction) and a second portion US2 that is hemmed at an end portion of the first portion US1 and extends in the first thickness direction (+Z1 direction). The second portion US2 may be connected to another portion of the first body portion 751.

According to an embodiment, the first central reinforcement portion 7523 may extend in a direction parallel to the folding axis F. For example, the first central reinforcement portion 7523 may extend in the first lateral direction (+X direction) and/or the second lateral direction (-X direction). The first central reinforcement portion 7523 may be disposed at a position that does not interfere with the hinge module 730. Without limitations thereto, if the first central reinforcement portion 7523 and the hinge module 730 do not interfere, the first central reinforcement portion 7523 may extend in a direction not parallel to the folding axis F. For example, the first central reinforcement portion 7523 may extend in a direction (e.g., the third lateral direction (+Y1 direction) and/or the fourth lateral direction (-Y1 direction)) perpendicular to the folding axis F.

According to an embodiment, the first central reinforcement portion 7523 may extend to an end portion facing the first lateral direction (+X direction) of the first hinge plate 750 and/or an end portion facing the second lateral direction (-X direction). Accordingly, structural rigidity in two opposite end areas of the first hinge plate 750 may be reinforced by the first central reinforcement portion 7523.

According to an embodiment, the first central reinforcement portion 7523 may be supported in the first thickness direction (+Z1 direction) by another member disposed on the side in the second thickness direction (-Z1 direction) of the first central reinforcement portion 7523. For example, the first central reinforcement portion 7523 may be supported by the hinge module 730 in the first thickness direction (+Z1 direction). According to an embodiment, when the first central reinforcement portion 7523 is disposed on the first housing 711 and/or the hinge cover (e.g., the hinge cover 332 of FIG. 8), the first central reinforcement portion 7523 may be supported in the first thickness direction (+Z1 direction) by the first housing 711 and/or the hinge cover (e.g., the hinge cover 332 of FIG. 8). Accordingly, bending deformation of the first hinge plate 750 due to external pressure may be prevented in the portion where the first central reinforcement portion 7523 is disposed.

According to an embodiment, the first central reinforcement portion 7523 may be non-overlapped in the thickness direction (e.g., the first thickness direction (+Z1 direction) and/or the second thickness direction (-Z1 direction) of the flexible circuit board 740 and the first housing 711. Specifically, when the foldable electronic device 701 is in the unfolded state (e.g., the state of FIG. 2), the flexible circuit board 740 may be in contact with or adjacent to the first hinge plate 750 (see FIG. 8) and, even when the foldable electronic device 701 is switched into the folded state (e.g., the state of FIG. 3), the flexible circuit board 740 may contact the first hinge plate 750. In an embodiment, as the first central reinforcement portion 7523 is disposed at a position not overlapping the flexible circuit board 740, it is possible to prevent interference of the flexible circuit board 740 with the first central reinforcement portion 7523 or damage to the flexible circuit board 740 by the first central reinforcement portion 7523.

According to an embodiment, the second reinforcement portion 762 may include a second central reinforcement portion 7623. The second central reinforcement portion 7623 may be disposed in at least an intermediate area of the second body portion 761. The second central reinforcement portion 7623 may reinforce structural rigidity of an intermediate area of the second hinge plate 760.

According to an embodiment, the second central reinforcement portion 7623 may be supported in the third thickness direction (+Z2 direction) by another member disposed on the side in the fourth thickness direction (-Z2 direction) of the second central reinforcement portion 7623. For example, the second central reinforcement portion 7623 may be supported by the hinge module 730 in the third thickness direction (+Z2 direction). According to an embodiment, when the second central reinforcement portion 7623 is disposed on the second housing 712 and/or the hinge cover (e.g., the hinge cover 332 of FIG. 8), the second central reinforcement portion 7623 may be supported in the third thickness direction (+Z2 direction) by the second housing 712 and/or the hinge cover (e.g., the hinge cover 332 of FIG. 8). Accordingly, bending deformation of the second hinge plate 760 due to external pressure may be prevented in the portion where the second central reinforcement portion 7623 is disposed.

The second central reinforcement portion 7623 may include a U-shaped structure US. The U-shaped structure US may be formed by bending a portion of the second body portion 761 in a U shape toward the hinge module 730. The U-shaped structure US may include a first portion US1 that is bent at a portion of the second body portion 761 and extends in one direction perpendicular to the second body portion 761 and a second portion US2 that is hemmed at an end portion of the first portion US1 and extends in the other direction opposite to the one direction. For example, the U-shaped structure US may include a first portion US1 that is bent in the fourth thickness direction (-Z2 direction) at a portion of the second body portion 761 and extends in the fourth thickness direction (-Z2 direction) and a second portion US2 that is hemmed at an end portion of the first portion US1 and extends in the third thickness direction (+Z2 direction). The second portion US2 may be connected to another portion of the second body portion 761.

According to an embodiment, the second central reinforcement portion 7623 may extend in a direction parallel to the folding axis F. For example, the second central reinforcement portion 7623 may extend in the first lateral direction (+X direction) and/or the second lateral direction (-X direction). The second central reinforcement portion 7623 may be disposed at a position that does not interfere with the hinge module 730. Without limitations thereto, if the second central reinforcement portion 7623 and the hinge module 730 do not interfere, the second central reinforcement portion 7623 may extend in a direction not parallel to the folding axis F. For example, the second central reinforcement portion 7623 may extend in a direction (e.g., the fifth lateral direction (+Y2 direction) and/or the sixth lateral direction (-Y2 direction)) perpendicular to the folding axis F.

According to an embodiment, the second central reinforcement portion 7623 may extend to an end portion facing the first lateral direction (+X direction) of the second hinge plate 760 and/or an end portion facing the second lateral direction (-X direction). Accordingly, structural rigidity in two opposite end areas of the second hinge plate 760 may be reinforced by the second central reinforcement portion 7623.

According to an embodiment, the second central reinforcement portion 7623 may be disposed at a position not overlapping the flexible circuit board 740 in the thickness direction (e.g., the third thickness direction (+Z2 direction) and/or the fourth thickness direction (-Z2 direction)) of the second housing 712. Specifically, when the foldable electronic device 701 is in the unfolded state (e.g., the state of FIG. 2), the flexible circuit board 740 may be in contact with or adjacent to the second hinge plate 760 (see FIG. 8) and, even when the foldable electronic device 701 is switched into the folded state (e.g., the state of FIG. 3), the flexible circuit board 740 may contact the second hinge plate 760. In an embodiment, as the second central reinforcement portion 7623 is disposed at a position not overlapping the flexible circuit board 740, it is possible to prevent interference of the flexible circuit board 740 with the second central reinforcement portion 7623 or damage to the flexible circuit board 740 by the second central reinforcement portion 7623.

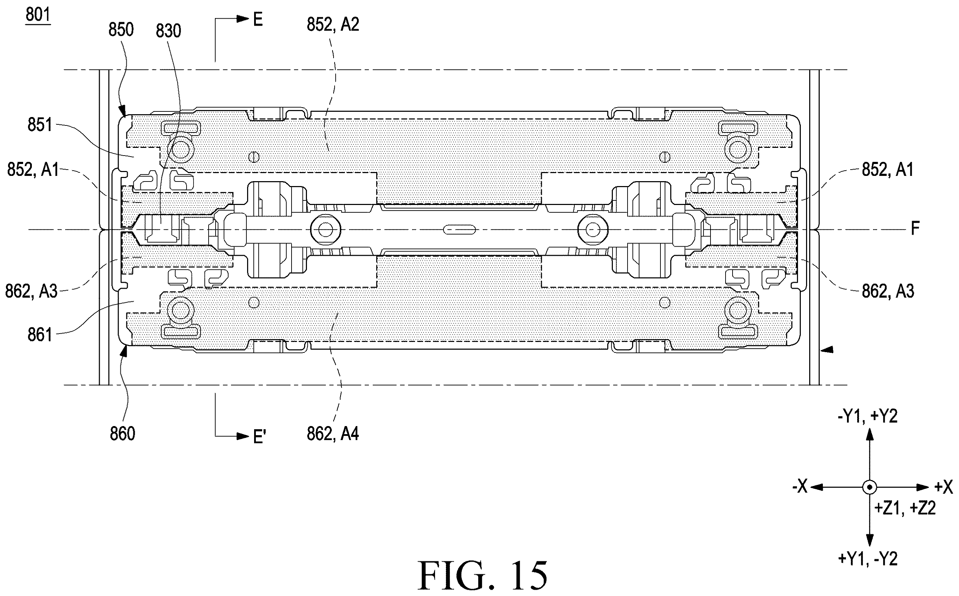

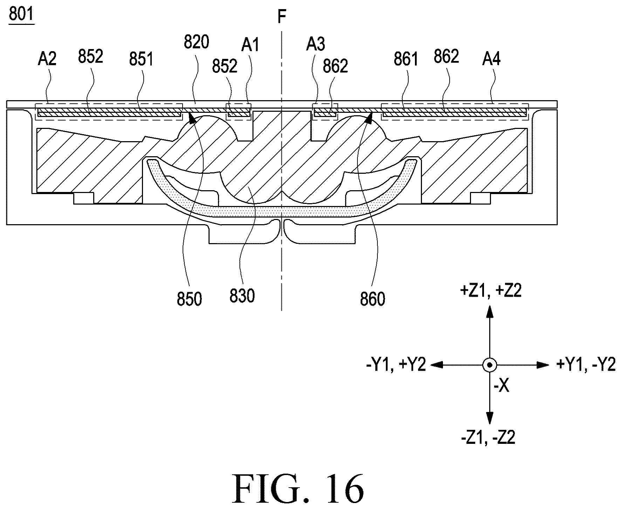

FIG. 15 is a plan view illustrating a partial configuration of a foldable electronic device according to an embodiment of the disclosure. FIG. 16 is a cross-sectional view taken along line E-E' of FIG. 15.

Specifically, FIG. 15 is a plan view illustrating areas of the first hinge plate 850 and the second hinge plate 860 when the foldable electronic device 801 is in an unfolded state (e.g., the state of FIG. 2).

The first reinforcement portion 352 illustrated in FIGS. 5 to 9, the first reinforcement portion 452 illustrated in FIG. 10, the first reinforcement portion 552 illustrated in FIG. 11, the first reinforcement portion 652 illustrated in FIG. 12, and/or the first reinforcement portion 752 illustrated in FIGS. 13 and 14 may additionally and/or alternatively include at least a portion of the structure of the first reinforcement portion 852 illustrated in FIG. 15. The second reinforcement portion 362 illustrated in FIGS. 5 to 9, the second reinforcement portion 462 illustrated in FIG. 10, the second reinforcement portion 562 illustrated in FIG. 11, the second reinforcement portion 662 illustrated in FIG. 12, and/or the second reinforcement portion 762 illustrated in FIGS. 13 and 14 may additionally and/or alternatively include at least a portion of the structure of the second reinforcement portion 862 illustrated in FIG. 15.

The detailed configuration of the foldable electronic device 801 according to an embodiment of the disclosure not described below may be identical or similar to the detailed configuration of the electronic device 101 according to an embodiment of the disclosure described with reference to FIGS. 2 to 4, the detailed configuration of the foldable electronic device 301 according to an embodiment of the disclosure described with reference to FIGS. 5 to 9, the detailed configuration of the foldable electronic device 401 according to an embodiment of the disclosure described with reference to FIG. 10, the detailed configuration of the foldable electronic device 501 according to an embodiment of the disclosure described with reference to FIG. 11, the detailed configuration of the foldable electronic device 601 according to an embodiment of the disclosure described with reference to FIG. 12, and/or the detailed configuration of the foldable electronic device 701 according to an embodiment of the disclosure described with reference to FIGS. 13 and 14.

According to an embodiment, the first hinge plate 850 may include a first body portion 851. The first body portion 851 may have a plate shape. The first body portion 851 may have a flat plate shape or may include a curved or bent portion (see FIG. 8).

According to an embodiment, the first hinge plate 850 may include a first reinforcement portion 852. The first reinforcement portion 852 may overlap at least a portion of the first body portion 851 in the first thickness direction (+X direction) and/or the second thickness direction (-X direction). A portion of the first hinge plate 850 where the first reinforcement portion 852 is disposed may be thicker than a portion where the first reinforcement portion 852 is not disposed. Structural rigidity of the first hinge plate 850 may be reinforced through the first reinforcement portion 852.

According to an embodiment, the first reinforcement portion 852 has a plate shape and may be fixed to the side in the second thickness direction (-X direction) of the first body portion 851. For example, the first reinforcement portion 852 may be provided separately from the first body portion 851 and fixed to the first body portion 851.

According to an embodiment, the first reinforcement portion 852 may be integrally formed with the first body portion 851. For example, the first reinforcement portion 852 may be formed by bending a portion of the first body portion 851. For example, the first reinforcement portion 852 may include a hemming structure (e.g., the hemming structure HS of FIGS. 6 and 7) where a portion of the edge of the first body portion 851 is hemmed and extended inwardly. For example, the first reinforcement portion 852 disposed in the first reinforcement area A1 may be formed by bending (e.g., hemming) the first body portion 851 at an edge facing the first lateral direction (+X direction) and/or the second lateral direction (-X direction) of the first body portion 851, or may be formed by bending (e.g., hemming) the first body portion 851 at an edge facing the folding axis F of the first body portion 851 (e.g., the edge facing the third lateral direction (+Y1 direction)). In contrast, e.g., the first hinge plate 850 may be injection-molded and/or cast so that the thickness of the area where the first reinforcement portion 852 is disposed (e.g., the first reinforcement area A1 and/or the second reinforcement area A2) is larger than the thickness of the area where the first reinforcement portion 852 is not disposed, in the step of manufacturing the same.

According to an embodiment, the first reinforcement portion 852 may be disposed at a position that does not interfere with the hinge module 830. For example, referring to FIG. 16, a portion of the hinge module 830 may be adjacent to a lower portion of the first hinge plate 850 (e.g., the side in the second thickness direction (-Z1 direction) of the first hinge plate 850). The first reinforcement portion 852 may be disposed in an area where the hinge module 830 is not adjacent to the first hinge plate 850. Advantageously, the first reinforcement portion reduces the likelihood of damage occurring in response to external pressure without impeding the movement of the hinge module.

According to an embodiment, the first hinge plate 850 may include a first reinforcement area A1. The first reinforcement area A1 may be an area adjacent to an edge facing the folding axis F in an area facing the first lateral direction (+X direction) side of the first hinge plate 850 and an area facing the second lateral direction (-X direction) side of the first hinge plate 850. The first reinforcement area A1 may be an area which is reinforced by a separate first reinforcement portion 852 in the portion where the first reinforcement portion 852 disposed in the second reinforcement area A2 is not extended by the hinge module 830. The first reinforcement area A1, which may be vulnerable to bending deformation due to external pressure and/or external impact, by including a part partially protruding from the first body portion 851 toward the folding axis F, may be reinforced by the first reinforcement portion 852.

According to an embodiment, the first hinge plate 850 may include a second reinforcement area A2. The second reinforcement area A2 may be disposed in a central area of an area adjacent to the edge facing the direction (e.g., the fourth lateral direction (-Y1 direction)) away from the folding axis F of the first hinge plate 850 and an area adjacent to the edge facing the folding axis F of the first hinge plate 850 (e.g., the edge facing the third lateral direction (+Y1 direction) of the first hinge plate 850). The second reinforcement area A2 is an area reinforced by the first reinforcement portion 852, and is not limited to the above-described area, and may mean a partial area of the above-described area, and may include other additional areas.

According to an embodiment, the first reinforcement area A1 and the second reinforcement area A2 may have different thicknesses. For example, the thickness of the first reinforcement portion 852 disposed in the first reinforcement area A1 may be about 0.1 mm, and the thickness of the first reinforcement portion 852 disposed in the second reinforcement area A2 may be about 0.2 mm. This difference in thickness between the first reinforcement area A1 and the second reinforcement area A2 may be to avoid interference with a structure (e.g., the hinge module 830) disposed under the first hinge plate 850. However, without limitations thereto, the thickness of the first reinforcement area A1 may be larger than the thickness of the second reinforcement area A2, or the thicknesses of the two areas may be the same.

According to an embodiment, the second hinge plate 860 may include a second body portion 861. The second body portion 861 may have a plate shape. The second body portion 861 may have a flat plate shape or may include a curved or bent portion (see FIG. 8).

According to an embodiment, the second hinge plate 860 may include a second reinforcement portion 862. The second reinforcement portion 862 may overlap at least a portion of the second body portion 861 in the third thickness direction (+Z2 direction) and/or the fourth thickness direction (-Z2 direction). A portion of the second hinge plate 860 where the second reinforcement portion 862 is disposed may be thicker than a portion where the second reinforcement portion 862 is not disposed. Structural rigidity of the second hinge plate 860 may be reinforced through the second reinforcement portion 862.

According to an embodiment, the second reinforcement portion 862 has a plate shape and may be fixed to the side in the fourth thickness direction (-Z2 direction) of the second body portion 861. For example, the second reinforcement portion 862 may be provided separately from the second body portion 861 and fixed to the second body portion 861.

According to an embodiment, the second reinforcement portion 862 may be integrally formed with the second body portion 861. For example, the second reinforcement portion 862 may be formed by bending a portion of the second body portion 861. For example, the second reinforcement portion 862 may include a hemming structure (e.g., the hemming structure HS of FIGS. 6 and 7) where a portion of the edge of the second body portion 861 is hemmed and extended inwardly. For example, the second reinforcement portion 862 disposed in the third reinforcement area A3 may be formed by bending (e.g., hemming) the second body portion 861 at an edge facing the first lateral direction (+X direction) and/or the second lateral direction (-X direction) of the second body portion 861, or may be formed by bending (e.g., hemming) the second body portion 861 at an edge facing the folding axis F of the second body portion 861 (e.g., the edge facing the fifth lateral direction (+Y2 direction)). In contrast, e.g., the second hinge plate 860 may be injection-molded and/or cast so that the thickness of the area where the second reinforcement portion 862 is disposed (e.g., the third reinforcement area A3 and/or the fourth reinforcement area A4) is larger than the thickness of the area where the second reinforcement portion 862 is not disposed, in the step of manufacturing the same.

According to an embodiment, the second reinforcement portion 862 may be disposed at a position that does not interfere with the hinge module 830. For example, referring to FIG. 16, a portion of the hinge module 830 may be adjacent to a lower portion of the second hinge plate 860 (e.g., the side in the fourth thickness direction (-Z2 direction) of the second hinge plate 860). The second reinforcement portion 862 may be disposed in an area where the hinge module 830 is not adjacent to the second hinge plate 860. Advantageously, the second reinforcement portion enhances the structural integrity of the device without impeding the function of the hinge module.

According to an embodiment, the second hinge plate 860 may include a third reinforcement area A3. The third reinforcement area A3 may be an area adjacent to an edge facing the folding axis F in an area facing the first lateral direction (+X direction) side of the second hinge plate 860 and an area facing the second lateral direction (-X direction) side of the second hinge plate 860. The third reinforcement area A3 may be an area which is reinforced by a separate second reinforcement portion 862 in the portion where the second reinforcement portion 862 disposed in the fourth reinforcement area A4 is not extended by the hinge module 830. The third reinforcement area A3, which may be vulnerable to bending deformation due to external pressure and/or external impact, by including a part partially protruding from the second body portion 861 toward the folding axis F, may be reinforced by the second reinforcement portion 862.

According to an embodiment, the second hinge plate 860 may include a fourth reinforcement area A4. The fourth reinforcement area A4 may be disposed in a central area of an area adjacent to the edge facing the direction (e.g., the sixth lateral direction (-Y2 direction)) away from the folding axis F of the second hinge plate 860 and an area adjacent to the edge facing the folding axis F of the second hinge plate 860 (e.g., the edge facing the fifth lateral direction (+Y2 direction) of the second hinge plate 860). The fourth reinforcement area A4 is an area reinforced by the second reinforcement portion 862, and is not limited to the above-described area, and may mean a partial area of the above-described area, and may include other additional areas.

According to an embodiment, the third reinforcement area A3 and the fourth reinforcement area A4 may have different thicknesses. For example, the thickness of the second reinforcement portion 862 disposed in the third reinforcement area A3 may be about 0.1 mm, and the thickness of the second reinforcement portion 862 disposed in the fourth reinforcement area A4 may be about 0.2 mm. This difference in thickness between the third reinforcement area A3 and the fourth reinforcement area A4 may be to avoid interference with a structure (e.g., the hinge module 830) disposed under the second hinge plate 860. However, without limitations thereto, the thickness of the third reinforcement area A3 may be larger than the thickness of the fourth reinforcement area A4, or the thicknesses of the two areas may be the same.

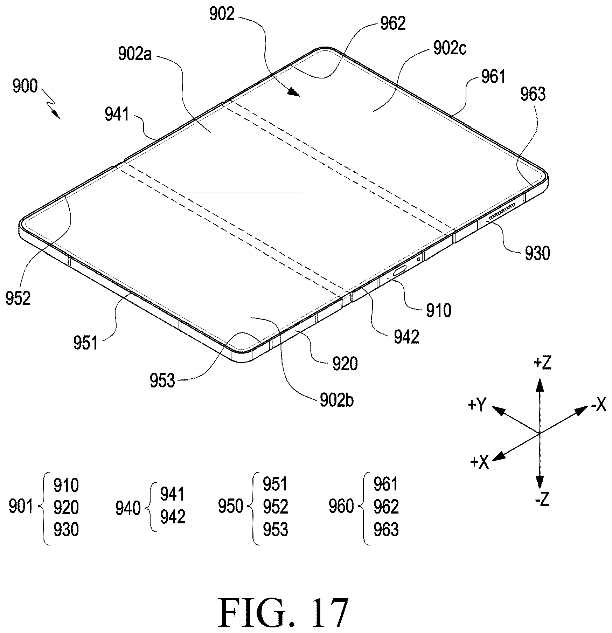

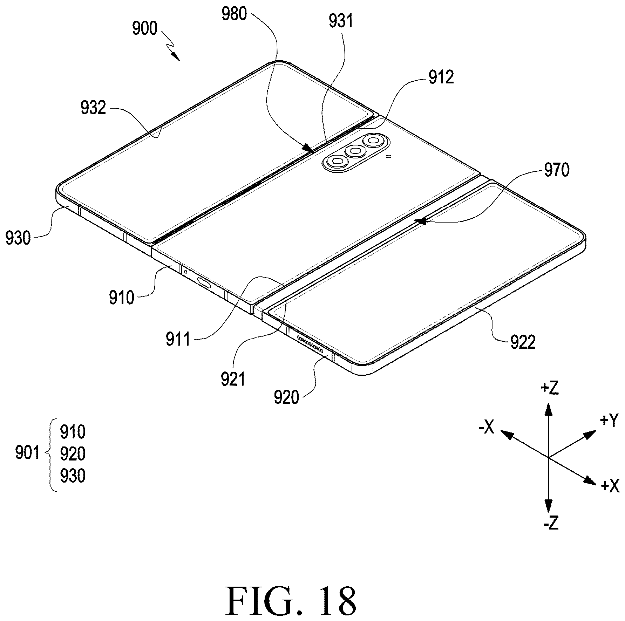

FIG. 17 is a perspective view illustrating an unfolded state of a foldable electronic device 900 according to an embodiment of the disclosure. FIG. 18 is a perspective view illustrating an unfolded state of a multi-foldable electronic device 900 according to an embodiment of the disclosure.

FIG. 17 may be a view of one side surface (e.g., the front surface) of the foldable electronic device 900 obliquely viewed, and FIG. 18 may be a view of the other side surface (e.g., the rear surface) of the foldable electronic device 900 obliquely viewed.

The detailed configuration of the foldable electronic device 900 according to an embodiment of the disclosure, which is not described below, may be the same as the detailed configuration of the electronic device 101 described with reference to FIG. 1 and/or the detailed configuration of the foldable electronic devices 301; 401; 501; 601; 701; 801 described with reference to FIGS. 2 to 16.

According to an embodiment, the foldable electronic device 900 may include a foldable housing 901. The foldable electronic device 900 may include a flexible display 902. The foldable housing 901 may form a space where the flexible display 902 is disposed. At least a portion of the flexible display 902 may be folded or unfolded.

According to an embodiment, the foldable housing 901 may include a first housing 910. The foldable housing 901 may include a second housing 920. The foldable housing 901 may include a third housing 930. The first housing 910 may be disposed between the second housing 920 and the third housing 930. The second housing 920 may be rotatably coupled to the first housing 910. The third housing 930 may be rotatably coupled to the first housing 910. The flexible display 902 may include a first display area 902a corresponding to the first housing 910, a second display area 902b corresponding to the second housing 920, and a third display area 902c corresponding to the third housing 930.

According to an embodiment, the foldable electronic device 900 may include supporting members 940, 950, and 960. The supporting members 940, 950, and 960 may be disposed between the foldable housing 901 and the flexible display 902. The supporting members 940, 950, and 960 may be coupled to the foldable housing 901 and may support the flexible display 902. The supporting members 940, 950, and 960 may be disposed to surround edges of the flexible display 902. The supporting members 940, 950, and 960 may extend along the circumference of the foldable housing 901. The supporting members 940, 950, and 960 may include a first supporting member 940 disposed in the first housing 910, a second supporting member 950 disposed in the second housing 920, and a third supporting member 960 disposed in the third housing 930. The supporting member 940, 950, or 960 may be referred to as a "body". The supporting member 940, 950, or 960 may be referred to as a "frame". The supporting member 940, 950, or 960 may be referred to as a "sealing member". The supporting member 940, 950, or 960 may be referred to as a "peripheral part". The supporting member 940, 950, or 960 may be referred to as a "circumferential part". The supporting member 940, 950, or 960 may be referred to as a "peripheral structure". The supporting member 940, 950, or 960 may be referred to as a "circumferential structure". The supporting members 940, 950, and 960 may be disposed between the housings 910, 920, and 930 and the flexible display 902. The supporting member 940, 950, or 960 may be referred to as a "cushioning member".

According to an embodiment, the supporting members 940, 950, and 960 may include a second supporting member 950. The second supporting member 950 may be disposed between the second housing 920 and the flexible display 902. The second supporting member 950 may be disposed along an edge of the second housing 920. The second supporting member 950 may include a 2-1th supporting member 951, a 2-2th supporting member 952, and a 2-3th supporting member 953. At least a portion of the flexible display 902 may be disposed between the 2-2th supporting member 952 and the 2-3th supporting member 953. The 2-1th supporting member 951 may connect the 2-2th supporting member 952 and the 2-3th supporting member 953. The 2-1th supporting member 951 may extend along an edge (e.g., the edge 922 of FIG. 18) of the second housing 920. The 2-1th supporting member 951 may be disposed between the edge 922 of the second housing 920 and the flexible display 902. The 2-1th supporting member 951 may be referred to as a "support frame" or a "first support frame". Each of the 2-2th supporting member 952 and the 2-3th supporting member 953 may be referred to as a "second support frame".

According to an embodiment, the supporting members 940, 950, and 960 may include a first supporting member 940. The first supporting member 940 may be disposed between the first housing 910 and the flexible display 902. The first supporting member 940 may be disposed along an edge of the first housing 910. The first supporting member 940 may include a 1-1th supporting member 941 and a 1-2th supporting member 942. At least a portion of the flexible display 902 may be disposed between the 1-1th supporting member 941 and the 1-2th supporting member 942. The 1-1th supporting member 941 may be disposed at one end portion of the first housing 910, and the 1-2th supporting member 942 may be disposed at the other end portion of the first housing 910. The supporting member 940, 950, or 960 may be referred to as a "deco," "finishing member," or "non-conductive member."

According to an embodiment, the supporting members 940, 950, and 960 may include a third supporting member 960. The third supporting member 960 may be disposed between the third housing 930 and the flexible display 902. The third supporting member 960 may be disposed along an edge of the third housing 930. The third supporting member 960 may include a 3-1th supporting member 961, a 3-2th supporting member 962, and a 3-3th supporting member 963. At least a portion of the flexible display 902 may be disposed between the 3-2th supporting member 962 and the 3-3th supporting member 963. The 3-1th supporting member 961 may connect the 3-2th supporting member 962 and the 3-3th supporting member 963. The 3-1th supporting member 961 may extend along an edge (e.g., the edge 932 of FIG. 18) of the third housing 930. The 3-1th supporting member 961 may be disposed between the edge 932 of the third housing 930 and the flexible display 902. The 3-1th supporting member 961 may be referred to as a "support frame" or a "first support frame". Each of the 3-2th supporting member 962 and the 3-3th supporting member 963 may be referred to as a "second support frame".

According to an embodiment, the first housing 910 may include a 1-1th side portion 911 and a 1-2th side portion 912. The 1-1th side portion 911 and the 1-2th side portion 912 may form two opposite side surfaces, respectively, of the first housing 910. The second housing 920 may be coupled to the 1-1th side portion 911. The third housing 930 may be coupled to the 1-2th side portion 912. The 1-1th side portion 911 may be referred to as a "first coupling portion". The 1-2th side portion 912 may be referred to as a "second coupling portion". The 1-1th side portion 911 may be referred to as a "first portion". The 1-2th side portion 912 may be referred to as a "second portion".

According to an embodiment, the second housing 920 may include a 2-1th side portion 921 and a 2-2th side portion 922. The 2-1th side portion 921 and the 2-2th side portion 922 may form two opposite side surfaces, respectively, of the second housing 920. The 2-1th side portion 921 may be coupled to the first housing 910. The 2-2th side portion 922 may form a side surface of the foldable housing 901. The 2-2th side portion 922 may be referred to as an "edge". The 2-1th side portion 921 may be referred to as a "third side portion". The 2-2th side portion 922 may be referred to as a "fourth side portion".

According to an embodiment, the third housing 930 may include a 3-1th side portion 931 and a 3-2th side portion 932. The 3-1th side portion 931 and the 3-2th side portion 932 may form two opposite side surfaces, respectively, of the third housing 930. The 3-1th side portion 931 may be coupled to the first housing 910. The 3-2th side portion 932 may form a side surface of the foldable housing 901. The 3-2th side portion 932 may be referred to as an "edge". The 3-1th side portion 931 may be referred to as a "fifth side portion". The 3-2th side portion 932 may be referred to as a "sixth side portion".

According to an embodiment, the foldable electronic device 900 may include a first hinge 970 and a second hinge 980. The first hinge 970 may be disposed between the first housing 910 and the second housing 920. The first hinge 970 may be disposed between the 1-1th side portion 911 and the 2-1th side portion 921. The first hinge 970 may rotatably connect the first housing 910 and the second housing 920. The second hinge 980 may be disposed between the first housing 910 and the third housing 930. The second hinge 980 may be disposed between the 1-2th side portion 912 and the 3-1th side portion 931. The second hinge 980 may rotatably connect the first housing 910 and the third housing 930.

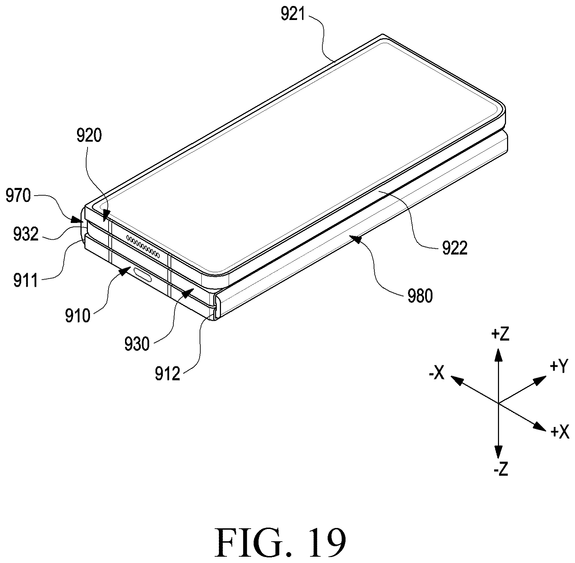

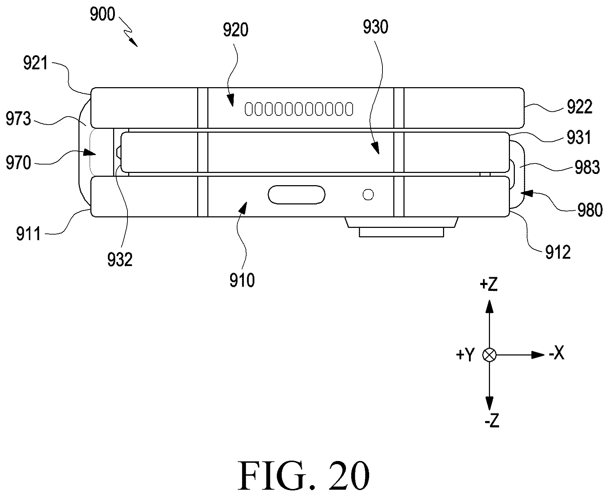

FIG. 19 is a perspective view illustrating a folded state of a foldable electronic device 900 according to an embodiment of the disclosure. FIG. 20 is a side view of the foldable electronic device 900 viewed from one direction (e.g., the -Y direction) to the other direction (e.g., the +Y direction).

According to an embodiment, the second housing 920 may be rotated with respect to the first housing 910. The first hinge 970 may provide a center of rotation to the second housing 920. The first hinge 970 may connect the 1-1th side portion 911 and the 2-1th side portion 921. The third housing 930 may be rotated with respect to the first housing 910. The second hinge 980 may provide a center of rotation to the third housing 930. The second hinge 980 may connect the 1-2th side portion 912 and the 3-1th side portion 931.

According to an embodiment, in the folded state of the foldable electronic device 900, each of the first, second, and third housings 910, 920, and 930 may be arranged in one direction (e.g., the +Y direction). For example, the third housing 930 may be disposed above the first housing 910, and the second housing 920 may be disposed above the third housing 930. For example, the third housing 930 may be disposed between the first housing 910 and the second housing 920.

According to an embodiment, in the folded state of the foldable electronic device 900, the first housing 910, the second housing 920, and the third housing 930 may be aligned with each other. For example, in the folded state of the foldable electronic device 900, the first housing 910, the third housing 930, and the second housing 920 may be aligned in one direction (e.g., the +Z direction) in the described order.

According to an embodiment, the foldable electronic device 900 may include a first hinge cover 973. The first hinge cover 973 may be disposed between the first housing 910 and the second housing 920. The first hinge cover 973 may be disposed between the first housing 910 and the first hinge 970. The first hinge cover 973 may be disposed between the second housing 920 and the first hinge 970. The first hinge cover 973 may be disposed to surround the first hinge 970. For example, the first hinge cover 973 may cover at least a portion of the first hinge 970. The first hinge cover 973 may be referred to as a 'hinge cover.' The first hinge cover 973 may be identical and/or similar to the hinge covers 332; 432; 532; 632 described with reference to FIGS. 6, 8, 10 and 12.

According to an embodiment, the foldable electronic device 900 may include a second hinge cover 983. The second hinge cover 983 may be disposed between the first housing 910 and the third housing 930. The second hinge cover 983 may be disposed between the first housing 910 and the second hinge 980. The second hinge cover 983 may be disposed between the third housing 930 and the second hinge 980. The second hinge cover 983 may be disposed to surround the second hinge 980. For example, the second hinge cover 983 may cover at least a portion of the second hinge 980. The second hinge cover 983 may be referred to as a 'hinge cover.' The second hinge cover 983 may be identical and/or similar to the hinge covers 332; 432; 532; 632 described with reference to FIGS. 6, 8, 10 and 12.

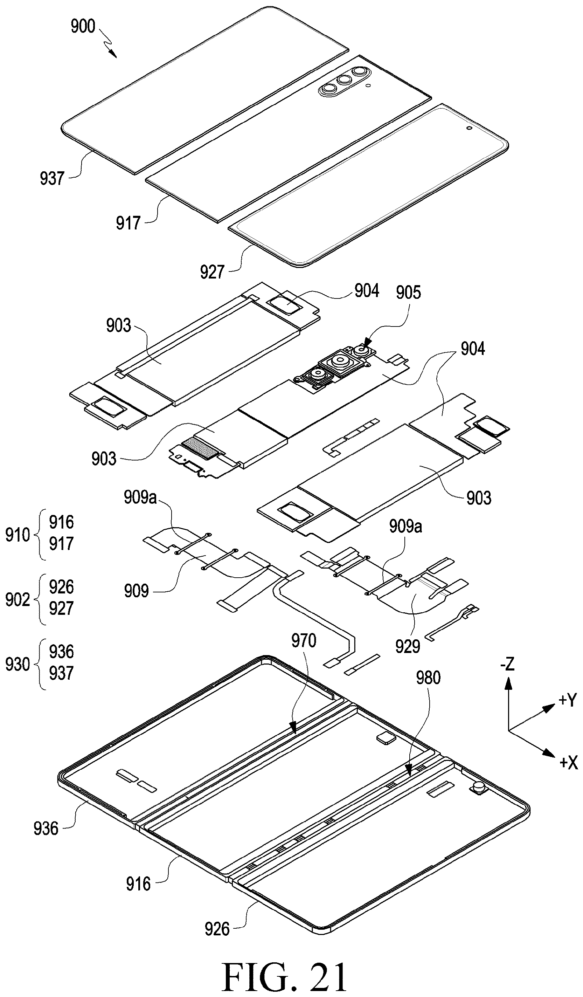

FIG. 21 is an exploded perspective view illustrating a foldable electronic device 900 according to an embodiment of the disclosure.

According to an embodiment, the first housing 910 may include a first housing body 916. The first housing 910 may include a first cover 917. The first housing body 916 and the first cover 917 may be coupled to each other. At least a portion of the display (e.g., the display 902 of FIG. 5) may be seated on the first housing body 916.

According to an embodiment, the second housing 920 may include a second housing body 926. The second housing 920 may include a second cover 927. The second housing body 926 and the second cover 927 may be coupled to each other. At least a portion of the display (e.g., the display 902 of FIG. 17) may be seated on the second housing body 926.

According to an embodiment, the third housing 930 may include a third housing body 936. The third housing 930 may include a third cover 937. The third housing body 936 and the third cover 937 may be coupled to each other. At least a portion of the display (e.g., the display 902 of FIG. 17) may be seated on the third housing body 936.

According to an embodiment, the first hinge 970 may rotatably connect the first housing body 916 and the second housing body 926. The second hinge 980 may rotatably connect the first housing body 916 and the third housing body 936.

According to an embodiment, the foldable electronic device 900 may include a battery 903. The battery 903 may supply power to the electric components of the foldable electronic device 900. The battery 903 may be disposed between the housing bodies 916, 926, and 936 and the covers 917, 927, and 937. The foldable electronic device 900 may include a circuit board 904. The circuit board 904 may be electrically connected to electric components of the foldable electronic device 900. The circuit board 904 may be disposed between the housing bodies 916, 926, and 936 and the covers 917, 927, and 937. The foldable electronic device 900 may include a camera assembly 905. The camera assembly 905 may be disposed between the housing bodies 916, 926, and 936 and the covers 917, 927, and 937. The foldable electronic device 900 may include a flexible circuit board 909. The flexible circuit board 909 may be connected to the circuit board 904.

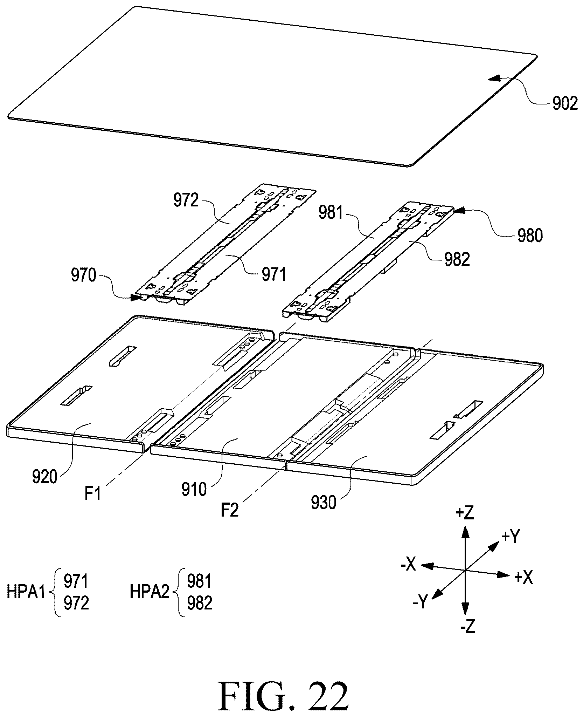

According to an embodiment, the foldable electronic device 900 may include a holder assembly 909a. The holder assembly 909a may be disposed on one side (e.g., an upper side) of the flexible circuit board 909. The holder assembly 909a may be fixed to each of the housings 910, 920, 930. The holder assembly 909a may fix the flexible circuit board 909 to each of the housings 910, 920, 930. The holder assembly 909a may be disposed under a 1-1th hinge plate (e.g., the 1-1th hinge plate 971 of FIG. 22), a 1-2th hinge plate (e.g., the 1-2th hinge plate 972 of FIG. 22), a 2-1th hinge plate (e.g., the 2-1th hinge plate 981 of FIG. 22), and/or a 2-2th hinge plate (e.g., the 2-2th hinge plate 982 of FIG. 22) to support the hinge plate assembly (e.g., the first hinge plate assembly HPA1 and/or the second hinge plate assembly HPA2 of FIG. 22). The holder assembly 909a may be identical and/or similar to the first holder assembly 346 and/or the second holder assembly 347 described with reference to FIGS. 8 and 9.

FIG. 22 is an exploded perspective view illustrating a foldable electronic device 900 according to an embodiment of the disclosure.

According to an embodiment, a foldable electronic device 900 may include a display 902 and a housing 910, 920, 930. The display 902 may be seated on the housing 910, 920, 930. The display 902 may be disposed on the housing 910, 920, 930 to be at least partially deformed. The housing 910, 920, 930 may include a first housing 910, a second housing 920, and a third housing 930. The first housing 910 and the second housing 920 may be rotatably coupled to each other. The first housing 910 and the third housing 930 may be rotatably coupled to each other. The second housing 920 may be referred to as a "third housing," and the third housing 930 may be referred to as a "second housing."

According to an embodiment, the foldable electronic device 900 may include a first hinge 970 and a second hinge 300. The first hinge 970 may rotatably connect the first housing 910 and the second housing 920. The second hinge 300 may rotatably connect the first housing 910 and the third housing 930. Referring to FIG. 19, the third housing 930 may be disposed between the first housing 910 and the second housing 920 in the folded state of the foldable electronic device 900. The first hinge 970 may have a width larger than that of the second hinge 300. Referring to FIGS. 19 and 20, the width of the first hinge 970 in one direction (e.g., +Z direction) may be larger than the width of the second hinge 300 in one direction (e.g., +Z direction). The first hinge 970 may be referred to as a 'wide hinge.' The second hinge 300 may be referred to as a 'narrow hinge.' Each of the first hinge 970 and the second hinge 300 may be referred to as a 'hinge.' Each of the first hinge 970 and the second hinge 300 may be referred to as a 'hinge assembly.'

According to an embodiment, the structure of the hinge plate assembly HPA described with reference to FIGS. 5 to 8 and/or the structure of the first hinge plate 350; 450; 550; 650; 750; 850 and the second hinge plate 360; 460; 560; 660; 760; 860 (hereinafter, 'hinge plate structure') may be formed in a plurality of areas in the foldable electronic device 900 according to an embodiment of the disclosure. For example, the foldable electronic device 900 performs a folding operation with respect to each of the two folding axes F1 and F2, and a first hinge 970 and a second hinge 980 are provided at portions where the respective folding operations are performed, and the hinge plate structure may be formed on each of the first hinge 970 and the second hinge 980.

According to an embodiment, the foldable electronic device 900 may include a first hinge plate assembly HPA1. The first hinge plate assembly HPA1 may be disposed between the first housing 910 and the second housing 920. The first hinge plate assembly HPA1 may be disposed in the area of the first folding axis F1. The first hinge plate assembly HPA1 and the first hinge plate assembly HPA1 may be referred to as a 'hinge plate assembly.' The specific structure of the first hinge plate assembly HPA1 may be identical and/or similar to the specific structure of the hinge plate assembly HPA described with reference to FIGS. 5 to 8.

According to an embodiment, the width (e.g., the length in the +X direction and/or -X direction) of the first hinge plate assembly HPA1 may be larger than the width (e.g., the length in the +X direction and/or -X direction) of the second hinge plate assembly HPA2. This may be due to the fact that the width in one direction (e.g., +Z direction) of the first hinge 970 in FIG. 20 is larger than the width in one direction (e.g., +Z direction) of the second hinge 980.

According to an embodiment, the first hinge plate assembly HPA1 may include a 1-1th hinge plate 971. The 1-1th hinge plate 971 may be disposed on the side of the first housing 910. The 1-1th hinge plate 971 may be disposed adjacent to the first folding axis F1. The 1-1th hinge plate 971 may be disposed between the first housing 910 and the flexible display 902. The 1-1th hinge plate 971 may support the flexible display 902. The specific structure of the 1-1th hinge plate 971 may be identical and/or similar to the structure of the first hinge plate 350; 450; 550; 650; 650; 750; 850, except that the component referred to as the folding axis F in connection with FIGS. 5 to 16 is referred to as the 'first folding axis F1.'

According to an embodiment, the first hinge plate assembly HPA1 may include a 1-2th hinge plate 972. The 1-2th hinge plate 972 may be disposed on the side of the second housing 920. The 1-2th hinge plate 972 may be disposed adjacent to the first folding axis F1. The 1-2th hinge plate 972 may be disposed adjacent to the first folding axis F1. The 1-2th hinge plate 972 may be disposed between the second housing 920 and the flexible display 902. The 1-2th hinge plate 972 may support the flexible display 902. The specific structure of the 1-2th hinge plate 972 may be identical and/or similar to the structure of the second hinge plate 360; 460; 560; 560; 660; 760; 860, except that the component referred to as the folding axis F in connection with FIGS. 5 to 16 is referred to as the 'first folding axis F1.'

According to an embodiment, the foldable electronic device 900 may include a second hinge plate assembly HPA2. The second hinge plate assembly HPA2 may be disposed between the first housing 910 and the third housing 930. The second hinge plate assembly HPA2 may be disposed in the area of the second folding axis F2. The second hinge plate assembly HPA2 and the second hinge plate assembly HPA2 may be referred to as a 'hinge plate assembly.' The specific structure of the second hinge plate assembly HPA2 may be identical and/or similar to the specific structure of the hinge plate assembly HPA described with reference to FIGS. 5 to 8.

According to an embodiment, the second hinge plate assembly HPA2 may include a 2-1th hinge plate 981. The 2-1th hinge plate 981 may be disposed on the side of the first housing 910. The 2-1th hinge plate 981 may be disposed adjacent to the second folding axis F2. The 2-1th hinge plate 981 may be disposed between the first housing 910 and the flexible display 902. The 2-1th hinge plate 981 may support the flexible display 902. The specific structure of the 2-1th hinge plate 981 may be identical and/or similar to the structure of the first hinge plate 350; 450; 550; 650; 650; 750; 850, except that the component referred to as the folding axis F in connection with FIGS. 5 to 16 is referred to as the 'second folding axis F2.'

According to an embodiment, the second hinge plate assembly HPA2 may include a 2-2th hinge plate 982. The 2-2th hinge plate 982 may be disposed on the side of the third housing 930. The 2-2th hinge plate 982 may be disposed adjacent to the second folding axis F2. The 2-2th hinge plate 982 may be disposed adjacent to the second folding axis F2. The 2-2th hinge plate 982 may be disposed between the third housing 930 and the flexible display 902. The 2-2th hinge plate 982 may support the flexible display 902. The specific structure of the 2-2th hinge plate 982 may be identical and/or similar to the structure of the second hinge plate 360; 460; 560; 560; 660; 760; 860, except that the component referred to as the folding axis F in connection with FIGS. 5 to 16 is referred to as the 'second folding axis F2.'

A foldable electronic device 301; 401; 501; 601; 701 according to an embodiment of the disclosure may comprise a foldable housing 310; 410; 510; 610; 710 comprising a first housing 311; 411; 511; 611; 711 and a second housing 312; 412; 512; 612; 712.

The foldable electronic device 301; 401; 501; 601; 701 according to an embodiment of the disclosure may comprise a flexible display 320; 420; 520; 620; 720 disposed across the first housing and the second housing.

The foldable electronic device 301; 401; 501; 601; 701 according to an embodiment of the disclosure may comprise a hinge module 330; 430; 530; 630; 730 connected to the first housing and the second housing, and configured to rotatably couple the first housing and the second housing about a folding axis F.

The foldable electronic device 301; 401; 501; 601; 701 according to an embodiment of the disclosure may comprise a hinge plate assembly HPA disposed between the hinge module and the flexible display and comprising a first hinge plate 350; 450; 550; 650; 750 disposed at the first housing side and a second hinge plate 360; 460; 560; 660; 760; 860 disposed at the second housing side.

The foldable electronic device 301; 401; 501; 601; 701 according to an embodiment of the disclosure may comprise a hinge cover 332; 432; 532; 632 disposed to surround the hinge module.

The foldable electronic device 301; 401; 501; 601; 701 according to an embodiment of the disclosure may comprise a flexible circuit board 340; 740 disposed across the first housing and the second housing, wherein at least a portion of the flexible circuit board is disposed at a space formed between the hinge plate assembly and the hinge cover.

The first hinge plate of the foldable electronic device 301; 401; 501; 601; 701 according to an embodiment of the disclosure may comprise a first body portion 351; 451; 551; 651; 751 having a plate shape, and a first reinforcement portion 352; 452; 552; 652; 752 comprising a part protruding in a direction perpendicular to the first body portion and formed by bending a portion of the first hinge plate.

In response to external pressure applied to the first hinge plate, the first reinforcement portion of the foldable electronic device 301; 401; 501; 601; 701 according to an embodiment of the disclosure may be supported by at least one of an internal structure of the first housing, disposed adjacent to the first reinforcing member, the hinge module or the hinge cover to alleviate deformation of the first hinge plate due.

The first reinforcement portion 352; 452; 552; 652 of the foldable electronic device 301; 401; 501; 601 according to an embodiment of the disclosure may be formed at at least a portion of an edge of the first hinge plate.

The first housing of the foldable electronic device 301; 401; 501; 601; 701 according to an embodiment of the disclosure may comprises a first supporting member 3111 configured to support the flexible display and the hinge module.

The foldable electronic device 301; 401; 501; 601 according to an embodiment of the disclosure may comprise a first holder assembly 346 disposed between the flexible circuit board and the first hinge plate and configured to fix the flexible circuit board to the first supporting member.

The first reinforcement portion of the foldable electronic device 301; 401; 501; 601 according to an embodiment of the disclosure may be configured to be supported by at least one of the first supporting member, the first holder assembly, the hinge module, or the hinge cover.

The first reinforcement portion 352; 452; 552; 652 of the foldable electronic device 301; 401; 501; 601 according to an embodiment of the disclosure may comprise a first perpendicular side reinforcement portion 3521; 4521; 5521; 6521 disposed at an edge perpendicular to the folding axis among edges of the first hinge plate.

The first perpendicular reinforcement portion of the foldable electronic device 301; 401; 501; 601 according to an embodiment of the disclosure may be supported by the hinge cover.

The first reinforcement portion 352 of the foldable electronic device 301 according to an embodiment of the disclosure may comprise a first horizontal side reinforcement portion 3522; 3523 disposed at at least a portion of an edge parallel to the folding axis among edges of the first hinge plate.

The internal structure of the first housing of the foldable electronic device 301; 401; 501; 601 according to an embodiment of the disclosure may comprise at least one of a first supporting member 3111 configured to support the flexible display disposed on the first housing side and the hinge module, or a first holder assembly 346 configured to fix the flexible circuit board to the first supporting member.

At least a portion of the first reinforcement portion 352 of the foldable electronic device 301 according to an embodiment of the disclosure may comprise a hemming structure HS, the hemming structure may comprise a portion HS1 that is hemmed from a portion of an edge of the first body portion 351 and extends inwardly toward a centre of the first body portion.

At least a portion of the first reinforcement portion 352 of the foldable electronic device 301 according to an embodiment of the disclosure may comprise a bending structure BS, the bending structure may comprise a portion BS1 that is bent from a portion of an edge of the first body portion 351 and extends in one direction perpendicular to the first body portion.

At least a portion of the first reinforcement portion 452 of the foldable electronic device 401 according to an embodiment of the disclosure may comprise a first composite structure CS1 disposed at an edge of the first body portion 451.

The first composite structure of the foldable electronic device 401 according to an embodiment of the disclosure may comprise a first portion CS1-1 that is bent from a portion of an edge of the first body portion, and extends in one direction perpendicular to the first body portion, a second portion CS1-2 that is hemmed inwardly from an end portion of the first portion and extends in the other direction opposite to the one direction, and a third portion CS1-3 that is bent inwardly from an end portion of the second portion and extends inwardly towards a centre of the first body portion.

At least a portion of the first reinforcement portion 552 of the foldable electronic device 501 according to an embodiment of the disclosure may comprise a second composite structure CS2 disposed at an edge of the first body portion 551.

The second composite structure of the foldable electronic device 501 according to an embodiment of the disclosure may comprise a first portion CS2-1 that is bent from a portion of an edge of the first body portion and extends in one direction perpendicular to the first body portion, a second portion CS2-2 that is hemmed outwardly from an end portion of the first portion and extends in the other direction opposite to the one direction, and a third portion CS2-3 that is bent outwardly from an end portion of the second portion and extends outwardly away from a centre of the first body portion.

At least a portion of the first reinforcement portion 652 of the foldable electronic device 601 according to an embodiment of the disclosure may comprise a third composite structure CS3 disposed at an edge of the first body portion 651.

The third composite structure of the foldable electronic device 401 according to an embodiment of the disclosure may comprise a first portion CS3-1 that is hemmed from a portion of an edge of the first body portion and extends inwardly towards a centre of the first body portion and a second portion CS3-2 that is hemmed from an end portion of the first portion and extends outwardly away from the center of the first body portion.

A distance d1 between an area, facing a first lateral direction parallel to the folding axis, of the first hinge plate of the foldable electronic device 301; 401; 501; 601; 701 according to an embodiment of the disclosure and an area, facing the first lateral direction, of the second hinge plate and a distance d2 between an area, facing a second lateral direction opposite to the first lateral direction, of the first hinge plate and an area, facing the second lateral direction, of the second hinge plate may be smaller than a distance d3 between a central area of the first hinge plate and a central area of the second hinge plate.

An edge, facing the first lateral direction, of the first hinge plate of the foldable electronic device 301; 401; 501; 601; 701 according to an embodiment of the disclosure and an edge, facing the first lateral direction, of the second hinge plate may be adjacent to each other.

An edge, facing the second lateral direction, of the first hinge plate of the foldable electronic device 301; 401; 501; 601; 701 according to an embodiment of the disclosure and an edge, facing the second lateral direction, of the second hinge plate may be adjacent to each other.

The second hinge plate 360; 460; 560; 660 of the foldable electronic device 301; 401; 501; 601 according to an embodiment of the disclosure may comprise a second body portion 361; 461; 561; 661 having a plate shape, and a second reinforcement portion 362; 462; 562; 662 comprising a part protruding in a direction perpendicular to the first body portion and formed by bending a portion of the second hinge plate.

The first reinforcement portion 352; 452; 552; 652 of the foldable electronic device 301; 401; 501; 601 according to an embodiment of the disclosure may comprise a first perpendicular side reinforcement portion 3521; 4521; 5521; 6521 disposed at an edge perpendicular to the folding axis among edges of the first hinge plate.

The second reinforcement portion 362; 462; 562; 662 of the foldable electronic device 301; 401; 501; 601 according to an embodiment of the disclosure may comprise a second perpendicular side reinforcement portion 3621; 4621; 5621; 6621 disposed at an edge perpendicular to the folding axis among edges of the second hinge plate.

The first perpendicular side reinforcement portion of the foldable electronic device 301; 401; 501; 601 according to an embodiment of the disclosure and the second perpendicular side reinforcement portion may be adjacent to each other.

A foldable electronic device 301; 401; 501; 601 according to an embodiment of the disclosure may comprise a foldable housing 310; 410; 510; 610 comprising a first housing 311; 411; 511; 611 and a second housing 312; 412; 512; 612.

The foldable electronic device 301; 401; 501; 601 according to an embodiment of the disclosure may comprise a flexible display 320; 420; 520; 620; 720 disposed across the first housing and the second housing.

The foldable electronic device 301; 401; 501; 601 according to an embodiment of the disclosure may comprise a hinge module 330; 430; 530; 630 connected to the first housing and the second housing configured to rotatably couple the first housing and the second housing about a folding axis F.

The foldable electronic device 301; 401; 501; 601 according to an embodiment of the disclosure may comprise a hinge plate assembly HPA disposed between the hinge module and the flexible display and comprising a first hinge plate 350; 450; 550; 650 disposed at the first housing side and a second hinge plate 360; 460; 560; 660 disposed at the second housing side.

The first hinge plate of the foldable electronic device 301; 401; 501; 601 according to an embodiment of the disclosure may comprise a first body portion 351; 451; 551; 651 having a plate shape, and a first reinforcement portion 352; 452; 552; 652 comprising a part protruding in a direction perpendicular to the first body portion and formed by bending a portion of the first hinge plate.

The first reinforcement portion of the foldable electronic device 301; 401; 501; 601 according to an embodiment of the disclosure may include a first perpendicular side reinforcement portion 3521; 4521; 5521; 6521 disposed on an edge perpendicular to the folding axis among edges of the first hinge plate and a first horizontal side reinforcement portion 3522 disposed on at least a portion of an edge parallel to the folding axis among the edges of the first hinge plate.

The foldable electronic device 301; 401; 501; 601 according to an embodiment of the disclosure may further comprise a hinge cover 332; 432; 532; 632 disposed to cover at least a portion of the hinge module.

The first perpendicular reinforcement portion of the foldable electronic device 301; 401; 501; 601 according to an embodiment of the disclosure may be supported by the hinge cover.

The first housing of the foldable electronic device 301 according to an embodiment of the disclosure may comprise a first supporting member 3111 supporting the flexible display and the hinge module.

The foldable electronic device 301 according to an embodiment of the disclosure may further comprise a flexible circuit board 340 disposed across the first housing and the second housing, wherein at least a portion of the flexible circuit board is disposed at a space formed between the hinge plate assembly and the hinge cover.

The foldable electronic device 301 according to an embodiment of the disclosure may further comprise a first holder assembly 346 disposed between the flexible circuit board and the first hinge plate and fixing the flexible circuit board to the first supporting member.

The first reinforcement portion 352 of the foldable electronic device 301 according to an embodiment of the disclosure may comprise a first horizontal side reinforcement portion 3522 disposed at at least a portion of an edge parallel to the folding axis among edges of the first hinge plate.

A portion of the first horizontal side reinforcement portion of the foldable electronic device 301 according to an embodiment of the disclosure may be supported by at least one of the first holder assembly or the first supporting member.

At least a portion of the first reinforcement portion 352 of the foldable electronic device 301 according to an embodiment of the disclosure may comprise a hemming structure HS comprising a portion HS1 that is hemmed from a portion of an edge of the first body portion 351 and extends inwardly toward a centre of the first body portion.

At least a portion of the first reinforcement portion 352 of the foldable electronic device 301 according to an embodiment of the disclosure may comprise a bending structure BS comprising a portion BS1 that is bent from a portion of an edge of the first body portion 351 and extends in one direction perpendicular to the first body portion.

While the disclosure has been shown and described with reference to exemplary embodiments thereof, it will be apparent to those of ordinary skill in the art that various changes in form and detail may be made thereto without departing from the scope of the disclosure as defined by the following claims.

While the disclosure has been described and shown in connection with an embodiment thereof, it should be appreciated that an embodiment is intended as limiting the disclosure but as illustrative. It will be apparent to one of ordinary skill in the art that various changes may be made in form and detail without departing from the overall scope of the disclosure, including the appended claims.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. A foldable electronic device (301; 401; 501; 601; 701) comprising:
a foldable housing (310; 410; 510; 610; 710) comprising a first housing (311; 411; 511; 611; 711) and a second housing (312; 412; 512; 612; 712);
a flexible display (320; 420; 520; 620; 720) disposed across the first housing and the second housing;
a hinge module (330; 430; 530; 630; 730) connected to the first housing and the second housing, and configured to rotatably couple the first housing and the second housing about a folding axis (F);
a hinge plate assembly, HPA, disposed between the hinge module and the flexible display and comprising a first hinge plate (350; 450; 550; 650; 750) disposed at the first housing side and a second hinge plate (360; 460; 560; 660; 760; 860) disposed at the second housing side;
a hinge cover (332; 432; 532; 632) disposed to surround the hinge module; and
a flexible circuit board (340; 740) disposed across the first housing and the second housing, wherein at least a portion of the flexible circuit board is disposed at a space formed between the hinge plate assembly and the hinge cover,
wherein the first hinge plate comprises a first body portion (351; 451; 551; 651; 751)having a plate shape, and a first reinforcement portion (352; 452; 552; 652; 752) comprising a part protruding in a direction perpendicular to the first body portion and formed by bending a portion of the first hinge plate, and
wherein, in response to external pressure applied to the first hinge plate, the first reinforcement portion is supported by at least one of an internal structure of the first housing, disposed adjacent to the first reinforcing member, the hinge module or the hinge cover to alleviate deformation of the first hinge plate.

2. The foldable electronic device (301; 401; 501; 601) of claim 1,
wherein the first reinforcement portion (352; 452; 552; 652) is formed at at least a portion of an edge of the first hinge plate.

3. The foldable electronic device (301; 401; 501; 601) of claim 1,
wherein the internal structure of the first housing comprises at least one of a first supporting member (3111) configured to support the flexible display disposed on the first housing side and the hinge module, or a first holder assembly (346) configured to fix the flexible circuit board to the first supporting member.

4. The foldable electronic device (301; 401; 501; 601) of any one of claims 1 to 3,
wherein the first reinforcement portion (352; 452; 552; 652) comprises a first perpendicular side reinforcement portion (3521; 4521; 5521; 6521) disposed at an edge perpendicular to the folding axis among edges of the first hinge plate.

5. The foldable electronic device (301; 401; 501; 601) of claim 4,
wherein the first perpendicular reinforcement portion is supported by the hinge cover.

6. The foldable electronic device (301) of any one of claims 1 to 5,
wherein the first reinforcement portion (352) comprises a first horizontal side reinforcement portion (3522; 3523) disposed at at least a portion of an edge parallel to the folding axis among edges of the first hinge plate.

7. The foldable electronic device (301) of claim 6,
wherein the first housing comprises a first supporting member (3111) configured to support the flexible display and the hinge module,
wherein the foldable electronic device further comprises a first holder assembly (346) disposed between the flexible circuit board and the first hinge plate and configured to fix the flexible circuit board to the first supporting member, and
wherein a portion of the first horizontal side reinforcement portion is supported by at least one of the first holder assembly or the first supporting member.

8. The foldable electronic device (301) of any one of claims 1 to 7,
wherein at least a portion of the first reinforcement portion (352) comprises a hemming structure, HS,the hemming structure comprising a portion, HS1, that is hemmed from a portion of an edge of the first body portion (351) and extends inwardly towards a centre of the the first body portion.

9. The foldable electronic device (301) of any one of claims 1 to 8,
wherein at least a portion of the first reinforcement portion (352) comprises a bending structure, BS,, the bending structure comprising a portion, BS1, that is bent from a portion of an edge of the first body portion (351) and extends in one direction perpendicular to the first body portion.

10. The foldable electronic device (401) of any one of claims 1 to 9,
wherein at least a portion of the first reinforcement portion (452) comprises a first composite structure (CS1) disposed at an edge of the first body portion (451), and
wherein the first composite structure comprise a first portion (CS1-1) that is bent from a portion of an edge of the first body portion and extends in one direction perpendicular to the first body portion, a second portion (CS1-2) that is hemmed inwardly from an end portion of the first portion and extends in the other direction opposite to the one direction, and a third portion (CS1-3) that is bent inwardly from an end portion of the second portion and extends inwardly towards a centre of the first body portion.

11. The foldable electronic device (501) of any one of claims 1 to 10,
wherein at least a portion of the first reinforcement portion (552) comprises a second composite structure (CS2) disposed at an edge of the first body portion (551), and
wherein the second composite structure comprises a first portion (CS2-1) that is bent from a portion of an edge of the first body portion and extends in one direction perpendicular to the first body portion, a second portion (CS2-2) that is hemmed outwardly from an end portion of the first portion and extends in the other direction opposite to the one direction, and a third portion (CS2-3) that is bent outwardly from an end portion of the second portion and extends outwardly away from a centre of the first body portion.

12. The foldable electronic device (601) of any one of claims 1 to 11,
wherein at least a portion of the first reinforcement portion (652) comprises a third composite structure (CS3) disposed at an edge of the first body portion (651), and
wherein the third composite structure comprises a first portion (CS3-1) that is hemmed from a portion of an edge of the first body portion and extends inwardly towards a centre of the first body portion and a second portion (CS3-2) that is hemmed from an end portion of the first portion and extends outwardly away from the centre of the first body portion.

13. The foldable electronic device (301; 401; 501; 601; 701) of any one of claims 1 to 12,
wherein a distance (d1) between an area, facing a first lateral direction parallel to the folding axis, of the first hinge plate and an area, facing the first lateral direction, of the second hinge plate and a distance (d2) between an area, facing a second lateral direction opposite to the first lateral direction, of the first hinge plate and an area, facing the second lateral direction, of the second hinge plate are smaller than a distance (d3) between a central area of the first hinge plate and a central area of the second hinge plate.

14. The foldable electronic device (301; 401; 501; 601; 701) of claim 13,
wherein an edge, facing the first lateral direction, of the first hinge plate and an edge, facing the first lateral direction, of the second hinge plate are adjacent to each other, and
wherein an edge, facing the second lateral direction, of the first hinge plate and an edge, facing the second lateral direction, of the second hinge plate are adjacent to each other.

15. The foldable electronic device (301; 401; 501; 601) of claim 13 or 14,
wherein the second hinge plate (360; 460; 560; 660) comprises a second body portion (361; 461; 561; 661) having a plate shape, and a second reinforcement portion (362; 462; 562; 662) comprising a part protruding in a direction perpendicular to the first body portion and formed by bending a portion of the second hinge plate,
wherein the first reinforcement portion (352; 452; 552; 652) comprises a first perpendicular side reinforcement portion (3521; 4521; 5521; 6521) disposed at an edge perpendicular to the folding axis among edges of the first hinge plate,
wherein the second reinforcement portion (362; 462; 562; 662) comprises a second perpendicular side reinforcement portion (3621; 4621; 5621; 6621) disposed at an edge perpendicular to the folding axis among edges of the second hinge plate, and
wherein the first perpendicular side reinforcement portion and the second perpendicular side reinforcement portion are adjacent to each other.
